# EUROPEAN PATENT SPECIFICATION

(11) **EP 4 466 825 B1**
(45) Date of publication and mention of the grant of the patent: **09.04.2025**
(21) Application number: 22707637.9
(22) Date of filing: 07.02.2022
(51) Int. Cl.: H04L 9/40

(54) **SENDING LABELED DATA OVER A HANDOVER INTERFACE**
SENDEN VON MARKIERTEN DATEN ÜBER EINE ÜBERGABESCHNITTSTELLE
ENVOI DE DONNÉES ÉTIQUETÉES SUR UNE INTERFACE DE TRANSFERT

(43) Date of publication of application: 27.11.2024
(73) Proprietor: Telefonaktiebolaget LM Ericsson (publ), 164 83 Stockholm (SE)
(72) Inventor: BELLAVISTA, Tiziana, 04024 Gaeta (LT) (IT); ASCIONE, Mario, 80059 Torre del Greco (NA) (IT); CIONE, Domenico Raffaele, 81100 Caserta (IT)
(74) Representative: Ericsson
(86) International application number: PCT/EP2022/052833
(87) International publication number: WO 2023/147879

(56) References cited:
- US-A1- 2003 101 356
- ETSI CARMINE RIZZO: "Inclusion of an Extended IPID parameter within the 102 232-1 PSHeader", vol. LI - LI_am, 23 June 2021 (2021-06-23), pages 1 - 3, XP014416928, Retrieved from the Internet <URL:ftp://docbox.etsi.org/LI/LI_am/05-CONTRIBUTIONS/2021/2021_06_21_PL_LI%2357-e/LI(21)P57009r3_Inclusion_of_an_Extended_IPID_parameter_within_the_102_232-1.docx> [retrieved on 20210623]
- ETSI CARMINE RIZZO: "Inclusion of an NFID parameter within the 102 232-1 PSHeader", vol. LI - LI_am, 15 June 2021 (2021-06-15), pages 1 - 2, XP014422060, Retrieved from the Internet <URL:ftp://docbox.etsi.org/LI/LI_am/05-CONTRIBUTIONS/2021/LI(21)P57007r3_Inclusion_of_an_NFID_parameter_within_the_102_232-1_PSHeader.docx> [retrieved on 20210615]

## Description

### TECHNICAL FIELD

The application relates to sending of labeled data over a handover interface. Methods, a lawful interception administration function (LI ADMF) device, and a network mediation device, are disclosed.

### BACKGROUND

Lawful Interception (LI) allows law enforcement agencies (LEAs) to obtain data from a communication network pursuant to lawful authority, e.g., a warrant, for the purpose of analysis or evidence. See, e.g., 3GPP Technical Specification (TS) 33.127 v17.1.0 for LI as specified by 3GPP. According to LI, a point of interception (POI) in the communication network intercepts data and transfers the intercepted data to a network mediation device that is the mediator between the communication network and a law enforcement monitoring facility. After conditioning the intercepted data for transport, the network mediation device sends the data over a handover interface to the law enforcement monitoring facility.

The law enforcement monitoring facility's analysis of intercepted data may benefit from being able to discriminate intercepted data based on which of potentially multiple POls intercepted the data. According to known approaches, such as those captured in ETSI TS 103 221-2 V1.4.1, ETSI TS 102 232-7 V3.9.1, and ETSI TS 102 232-1 V3.23.1, the POI can send an identifier of the POI to the network mediation device along with the intercepted data, whereupon the network mediation device can transparently forward that identifier to the law enforcement monitoring facility. Problematically, though, the POI may not send its identifier under some circumstances, as it is optional to do so and only supported for certain services. Challenges exist, then, in reliably informing a law enforcement monitoring facility about the identity of a POI that intercepted data.
The ETSI document LI(21)P57009R3, "Inclusion of an extended IPID parameter within the 102 232-1 PSHeader", discloses an Extended Interception Point Identifier (EIPID) in a PSHeader.

### SUMMARY

One object of the invention is to enable a more reliable way of lawful interception.

Some embodiments herein equip a network mediation device in a communication network with the ability to itself differentiate lawfully intercepted data based on which point of interception (POI) intercepted that data. Indeed, rather than just naively forwarding a POI identifier from the POI to a law enforcement monitoring facility, the network mediation device herein may actually determine which POI intercepted the data, e.g., based on information representing the network's topology, and then signal the identity of that POI to the law enforcement monitoring facility, e.g., by labeling the data with a header field whose value identifies the POI. With the network mediation device itself able to decide which identifier to use for identifying the POI that lawfully intercepted data, some embodiments herein provide POI identity information to a law enforcement monitoring facility in a more reliable way, with less reliance on the POI, so as to increase the value of lawful interception.

More particularly, embodiments herein include a method performed by a network mediation device in a communication network of a communication service provider. The method comprises receiving data intercepted at a point of interception in the communication network as part of a lawful interception service, and labelling the data with a field that has a value set to identify the point of interception at which the data was intercepted. In this case, labeling the data comprises determining the value to which to set the field based on information stored in the network mediation device indicating different values to which to respectively set the field for different possible points of interception in the communication network. The method also comprises sending the labeled data over a handover interface from the network mediation device towards a law enforcement monitoring facility.

In some embodiments, the value to which to set the field is determined based on a name of a network device at which the data was intercepted, and an interface used by the network device to provide the data to the network mediation device.

In some embodiments, the information in the network mediation device maps different possible combinations of values for identifying parameters to different possible values for the field, and the different possible combinations of values for the identifying parameters are respectively associated with the different possible points of interception in the communication network. In one such embodiment, labeling the data comprises determining which combination of values for the identifying parameters is associated with the point of interception at which the data was intercepted, consulting the information stored in the network mediation device to determine which possible value for the field is mapped to the determined combination of values, and setting the value of the field to the determined value.

In some embodiments, the field is an interceptionPointlD field within a packet switched header.

In some embodiments, the method also comprises receiving the information from a lawful interception administrative device in the communication network.

In some embodiments, the labeling comprises labeling the data with another field that has a value set to identify the network mediation device.

Other embodiments include a method performed by a lawful interception administrative device in a communication network of a communication service provider. The method comprises transmitting, to a network mediation device in the communication network, information indicating, for each of different possible points of interception at which data is interceptable as part of a lawful interception service in the communication network, a value of a field with which the network mediation device is to label the data for sending over a handover interface towards a law enforcement monitoring facility.

In some embodiments, the value of the field with which the network mediation device is to label the data is a function of a name of a network device at which the data was intercepted, and an interface used by the network device to provide the data to the network mediation device. In one or more of these embodiments, the value of the field with which the network mediation device is to label the data is a function also of a name of the communication service provider or the communication network within which the network device is deployed, and a country within which the data was intercepted.

In some embodiments, the information maps different possible combinations of values for identifying parameters to different possible values for the field, and the different possible combinations of values for the identifying parameters are respectively associated with the different possible points of interception in the communication network. In one or more of these embodiments, the identifying parameters include a device parameter whose value indicates a name of a network device at which the data was intercepted, an interface parameter whose value indicates an interface used by the network device to provide the data to the network mediation device, a parameter whose value indicates a name of the communication service provider or the communication network within which the network device is deployed, and a country parameter whose value indicates a country within which the data was intercepted. In one or more of these embodiments, the method further comprises generating, for each of the different possible combinations of values for the identifying parameters, the possible value for the field mapped to that possible combination of values for the identifying parameters as a hash of that possible combination of values.

Other embodiments herein include a network mediation device configured for use in a communication network of a communication service provider. The network mediation device is configured to receive data intercepted at a point of interception in the communication network as part of a lawful interception service, and label the data with a field that has a value set to identify the point of interception at which the data was intercepted, In this case, labeling the data comprises determining the value to which to set the field based on information stored in the network mediation device indicating different values to which to respectively set the field for different possible points of interception in the communication network. The network mediation device is also configured to send the labeled data over a handover interface from the network mediation device towards a law enforcement monitoring facility.

In some embodiments, the network mediation device is configured to perform the method described above for a network mediation device.

Other embodiments herein include a lawful interception administrative device configured for use in a communication network of a communication service provider. The lawful interception administrative device is configured to transmit, to a network mediation device in the communication network, information indicating, for each of different possible points of interception at which data is interceptable as part of a lawful interception service in the communication network, a value of a field with which the network mediation device is to label the data for sending over a handover interface towards a law enforcement monitoring facility.

In some embodiments, the lawful interception administrative device is configured to perform the method described above for the lawful interception administrative device.

### BRIEF DESCRIPTION OF THE DRAWINGS

Figure 1 is a block diagram of a lawful interception system for a communication network according to some embodiments.
Figure 2A is a block diagram of point of interception (POI) information at a network mediation device according to some embodiments.
Figure 2B is a block diagram of point of interception (POI) information at a network mediation device according to other embodiments.
Figure 3 is a call flow diagram of a procedure for generating POI information in the form of a table according to some embodiments.
Figure 4 is a call flow diagram of a procedure for using POI information in the form of a table for identifying the POI to an LEA according to some embodiments.
Figure 5 is a logic flow diagram of a method performed by a network mediation device according to some embodiments.
Figure 6 is a logic flow diagram of a method performed by a lawful interception administrative device according to some embodiments.
Figure 7 is a block diagram of a network mediation device according to some embodiments.
Figure 8 is a block diagram of a lawful interception administrative device according to some embodiments.
Figure 9 is a block diagram of a communication system in accordance with some embodiments
Figure 10 is a block diagram of a user equipment according to some embodiments.
Figure 11 is a block diagram of a network node according to some embodiments.
Figure 12 is a block diagram of a host according to some embodiments.
Figure 13 is a block diagram of a virtualization environment according to some embodiments.
Figure 14 is a block diagram of a host communicating via a network node with a UE over a partially wireless connection in accordance with some embodiments.

### DETAILED DESCRIPTION

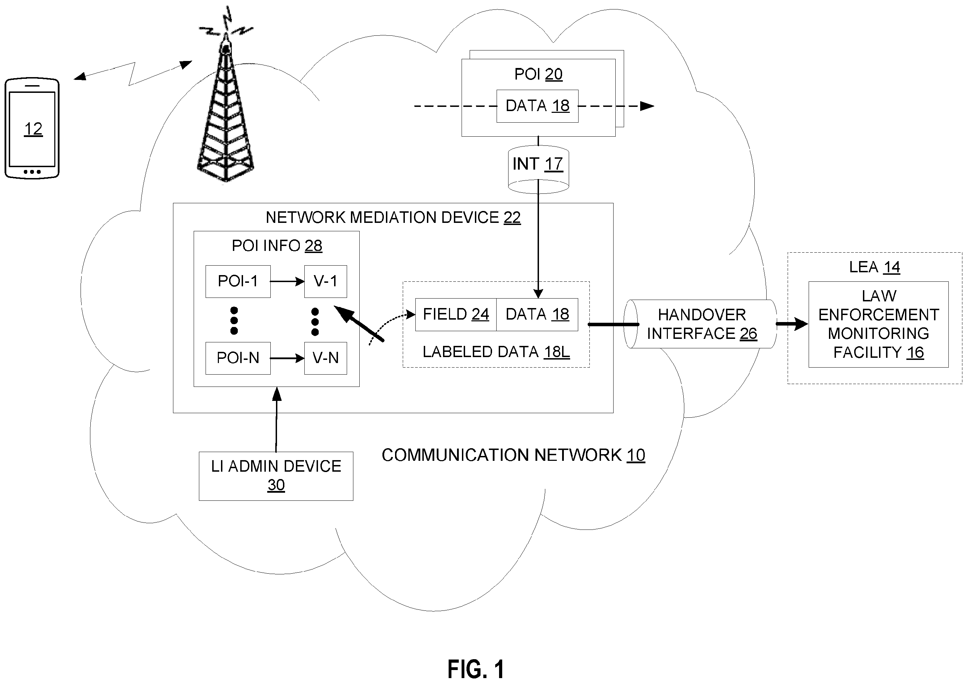

Figure 1 shows a communication network 10 of a communication service provider (CSP) according to some embodiments. The communication network 10 provides communication service to one or more communication devices, one of which is shown as communication device 12. In the specific example of Figure 1, the communication network 10 is a wireless communication network, in which case the communication network 10 provides the communication service over a wireless communication interface with communication device(s).

The communication network 10 as shown provides a lawful interception (LI) service to a law enforcement agency (LEA) 14. The communication network 10 in this regard intercepts data 18 pursuant to lawful authority, e.g., a warrant, and provides the intercepted data 18 to a law enforcement monitoring facility 16 associated with the LEA 14, for the purpose of analysis or evidence. The law enforcement monitoring facility 16 may for example comprise one or more law enforcement devices, e.g., configurable to monitor data 18 intercepted by the LI service.

In some embodiments, the data 18 that the communication network 10 intercepts as part of LI includes copies of the content of communications transmitted to and/or from a communication device 12. The content of communications may, for example, include any material or information concerning the substance, purport, or meaning of the communications. Alternatively or additionally, the intercepted data 18 may include material or information related to the interception of communications transmitted to and/or from a communication device 12. Such intercepted-related information (IRI) may for example include dialing, signaling, or addressing information that identifies the origin, direction, destination, or termination of each communication generated or received by a subscriber by means of any equipment, facility, or service of a service provider. This may include for instance parameters of the signaling information that can be used as a means to subscribe to or activate features of the service, or establish and control a communication attempt. Generally, then, in some embodiments, the data 18 that the communication network 10 intercepts may include copies of network traffic that contain material related to IRI or material related to IRI and the content of communications.

There are multiple points 20 in the communication network 10 at which data 18 can be intercepted as part of LI. Each such point 20 is referred to herein as a point of interception (POI). A POI 20 may be a physical, logical, or functional point at which data 18 is intercepted. A POI 20 may for instance be, or be hosted at, an access element, a network connectivity element, or a service element in the communication network 10, e.g., as defined in ETSI TR 101 944. A POI 20 may correspondingly intercept data 18 at one or more protocol layers, e.g., physical, data link, network, or application layer. In embodiments where the communication network 10 has a service-based architecture with a set of interconnected network functions (NFs), a POI 20 may be a sub-function of an NF in the communication network 10, e.g., where each NF may implement one or more POls. Where the communication network 10 is a 5G network, for instance, the communication network 10 may include NFs such as an Access and Mobility Function (AMF), a Session Management Function (SMF), a User Data Management (UDM) function, etc., in which case a POI 20 may be a sub-function of an AMF, SMF, UDM, etc. Different POls 20 may intercept different types of data 18 and/or in different formats. For example, a POI 20 implemented as an access element may produce intercepted data 18 in the form of a Physical layer Protocol Data Unit (PDU), a Data Link layer PDU, or a Network layer (e.g., Internet Protocol, IP) Datagram, whereas a POI 20 implemented at a network connectivity element may produce intercepted data 18 in the form of a Network layer (e.g., IP) Datagram and a POI 20 implemented at a service element may produce intercepted data 18 in the form of an Application layer transaction or application level PDU.

No matter the particular nature of the POIs 20 in the communication network 10, the communication network 10 according to embodiments herein sends the law enforcement monitoring facility 16 information that identifies at which POI 20 data 18 was intercepted. Some embodiments herein advantageously provide this identity information to the law enforcement monitoring facility 16 in a reliable way, so as to increase the value of lawful interception to the LEA 13.

Some embodiments in this regard exploit a network mediation device 22 for this purpose. In one embodiment, the network mediation device 22 implements or hosts a mediation function (MF), e.g. as defined by ETSI TS 103 462 V1.2.1, or a mediation and delivery function (MDF), e.g., as defined by ETSI TS 102 232-1 V3.24.1.

The network mediation device 22 as shown receives data 18 intercepted at a POI 20 as part of the LI service. The POI 20 may for example encapsulate the intercepted data 18 into PDUs defined for an interface 17 between the POI 20 and then send a binary stream of the PDUs to the network mediation device 22 over the interface 17, e.g., where each PDU may contain intercepted data 18 as well as a set of header fields and/or a set of attributes for conveying identifiers, routing information, correlation information, and/or metadata about the intercepted data 18. In one embodiment, for instance, the interface 17 between the POI 20 and the network mediation device 22 may be an X2 interface or an X3 interface, e.g., as specified by ETSI TS 103 221-2 V1.4.1.

In receipt of the intercepted data 18 from the POI 20, the network mediation device 22 performs any necessary translation, correlation, and/or mediation for onward handover of the intercepted data 18 to the law enforcement monitoring facility 16. The network mediation device 22 in this regard labels the intercepted data 18 with one or more fields, e.g., to allow the intercepted data 18 to be identified, ordered, etc. In some embodiments, the field(s) are prepended to the intercepted data 18 in the form of a header, although the field(s) may be added anywhere (e.g., in a footer) or as part of an overall enveloping process. No matter the particular type or location of the added field(s), by labeling the intercepted data 18 in this way, the network mediation device 22 produces labeled data 18L. The network mediation device 22 then sends this labeled data 18L over a handover interface 26 towards the law enforcement monitoring facility 16.

For example, in some embodiments where the network mediation device 22 receives the intercepted data 18 from the POI 20 as a binary stream of PDUs defined for the interface 17, the network mediation device 22 produces, from that binary stream of PDUs, labeled data 18L in the form of one or more PDUs defined for a handover interface 26 with the law enforcement monitoring facility 16. The network mediation device 22 may for instance aggregate a set of PDUs received on the interface 17 with the POI 20, and then label the aggregated PDUs with one or more fields, to produce labeled data 18L in the form of a PDU defined for the handover interface 26.

In any event, the network mediation device 22 as shown labels the intercepted data 18 with a field 24 that has a value set to identify the POI 20 at which the data 18 was intercepted. The field 24 may for instance be a field defined on the handover interface 26, e.g., such that the POI 20 at which the data 18 was intercepted is identifiable at the handover interface level. For example, in some embodiments, the field 24 is an interceptionPointlD field within a packet switched (PS) header. In these and other embodiments, the intercepted data 18 may be labeled with such a field 24 in addition to another field (e.g., a Network Element ID field) which has a value set to identify the network mediation device 22.

Notably, the network mediation device 22 in some embodiments determines the value to which to set the field 24 based on information 28 in the network mediation device 22 (i.e. stored in the network mediation device) indicating different values V-1... V-N to which to respectively set the field 24 for different possible POIs (POI-1... POI-N) in the communication network 10. As shown in Figure 1, for instance, the information 28 indicates the network mediation device 22 is to set the field 24 to value V-1 to indicate that data 18 was intercepted at POI-1, to value V-N to indicate that data 18 was intercepted at POI-N, etc. The information 28 may thereby map POIs 20 in the communication network 10 to respective values for the field 24, e.g., based on or consistent with a topology of the communication network 10. The value of the field 24 may thereby effectively operate as an identity of the POI 20 that intercepted data 18, e.g., an identity of the internal network point where the data 18 was fetched. For instance, different values of the field 24 may function as identities of different POIs 20. In one or more embodiments, a lawful interception administrative device 30 (e.g., implementing an Administrative Function, ADMF) configures the network mediation device 22 with this information 28, e.g., according to the network topology.

By equipping the network mediation device 22 with this information 28, some embodiments effectively equip the network mediation device 22 with the ability to itself decide which value to signal on the handover interface 26 for identifying which POI 20 intercepted the data 18. In one or more embodiments, for example, the network mediation node 22 may actually determine which POI 20 intercepted the data 18 and then determine, from the information 28, to which value to set the field 24 for identifying that POI 20 to the law enforcement monitoring facility 16. Especially in embodiments where the network mediation device 22 receives the information 28 from a lawful interception administrative device 30 (e.g., implementing an Administrative Function, ADMF), the network mediation device's ability to inform the law enforcement monitoring facility 16 about the identity of the POI 20 that intercepted the data 18 is not dependent on the POI 20 informing the network mediation device 22 about what identity the network mediation device 22 is to use for identifying the POI 20 over the handover interface 26. That is, in embodiments herein, the network mediation device 22 need not rely on the POI 20 to send its POI identifier over interface 17 in order for the network mediation device 22 to be able to identify that POI 20 on the handover interface 26 as the origin of the intercepted data 18. Indeed, the network mediation device 22 in some embodiments does not need to receive a POI identifier from the POI 20 on interface 17 and/or does not just naively forward such a POI identifier to the law enforcement monitoring facility 16 over the handover interface 26. Rather, the network mediation device 22 itself implements the logic to determine, based on information 28, to what value to set the field 24 for identifying the POI 20 to the law enforcement monitoring facility 16.

With the network mediation device 22 itself able to decide which value to use for identifying the POI 20 that lawfully intercepted data 18, some embodiments herein identify the POI 20 to the law enforcement monitoring facility 16 in a more reliable way, with less reliance on the POI 20 and/or the interface 17 with the POI 20. In fact, some embodiments herein are able to identify the POI 20 to the law enforcement monitoring facility 16 on the handover interface 26 even if the POI 20 does not signal any identity over interface 17 that the network mediation device 22 could forward on the handover interface 26 for identifying the POI 20, e.g., which may be the case for certain services and/or for certain POIs that lack support for signaling such identity over interface 17. Some embodiments accordingly are able to identify the POI 20 on the handover interface 26 in a service-agnostic way and/or in a way that is more resilient to POI capabilities and/or signaling. By improving the availability and/or reliability of information on the handover interface 26 that identifies the POI 20 which intercepted data 18, embodiments herein increase the value of lawful interception to law enforcement.

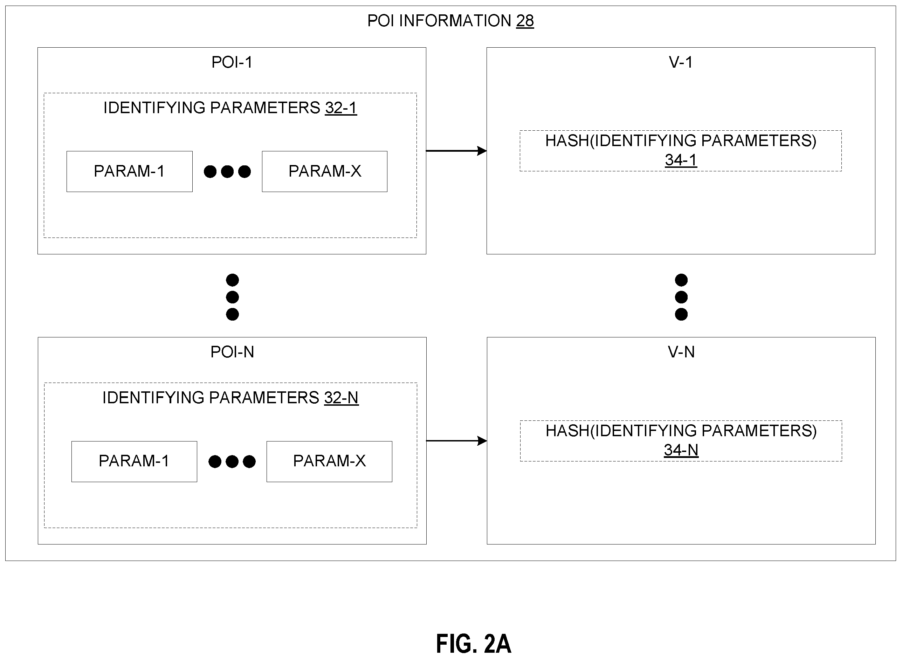

More particularly, in some embodiments, different POIs 20 in the communication network 10 are associated with different combinations of values for certain parameters, e.g., as signaled over interface 17 or as otherwise determinable by the network mediation device 22. Figure 2A shows one example implementation of information 28 in the network mediation device 22 in these embodiments, where there are X identifying parameters, shown as PARAM-1 through PARAM-X. As shown, N different possible combinations 32-1...32-N of values for the identifying parameters PARAM-1... PARAM-X are respectively associated with N different possible POIs, namely POI-1... POI-N. The information 28 in the network mediation device 22 maps these N different possible combinations 32-1...32-N of values for the identifying parameters PARAM-1... PARAM-X to different possible values V-1... V-N for the field 24. For example, for each of the N different possible combinations 32-1...32-N of values for the identifying parameters PARAM-1... PARAM-X, the possible value for the field 24 mapped to that possible combination may be a hash of that possible combination of values. As shown in the example of Figure 2A, for instance, the combination 32-1 of values associated with POI-1 is mapped to a value V-1 equal to a hash of that combination 32-1 of values, e.g., where the hash comprises a hash of a concatenation of those values. Similarly, the combination 32-N of values associated with POI-N is mapped to a value V-N equal to a hash of that combination 32-N of values. In one example, the hash function may be implemented with a Cyclic Redundancy Check (CRC) function which guarantees the uniqueness of the output with the same input, e.g., a CRC-32 function guarantees an 8 character length string value.

In these and other embodiments, the network mediation device 22 may receive or otherwise determine a combination of values for the identifying parameters which is asserted as being associated with the POI 20 at which the data 18 was intercepted, e.g., where the asserted combination may be asserted by the POI 20 itself and received from the POI 20 over interface 17 along with the intercepted data 18. The network mediation device 22 may then consult the information 28 in the network mediation device 22 (e.g., a look-up of the information stored in a look-up table in the network mediation device 22)) to determine which possible value V-1... V-N for the field 24 is mapped to the asserted combination of values. The network mediation device 22 in this case sets the value of the field 24 to the determined value.

Note, though, before consulting the information 28 in the network mediation device 22 to determine which possible value V-1... V-N for the field 24 is mapped to the asserted combination of values, the network mediation device 22 in some embodiments validates the asserted combination of values as being a valid combination of values in the communication network 10. Such validation may for instance safeguard against unauthorized interception, e.g., maliciously attempted with a combination of values that is not defined according to the network topology. In these embodiments, then, based on validating the asserted combination of values, the network mediation device 22 may determine (i.e., verify) that the asserted combination of values is actually associated with the POI 20 at which the data 18 was intercepted.

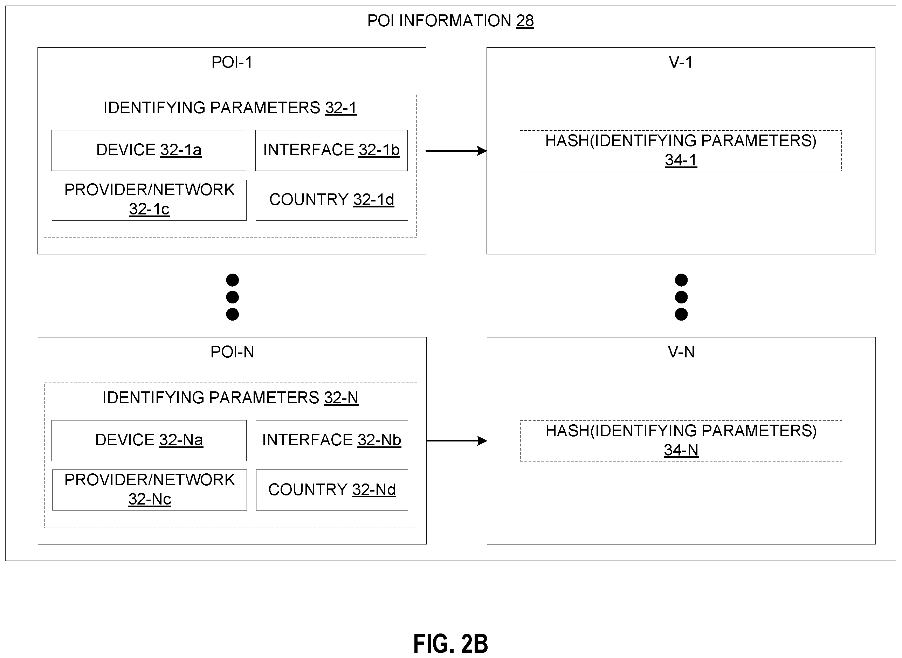

Figure 2B illustrates one example where the identifying parameters 32-1...32-N include (i) a device parameter whose value indicates a name of a network device at which data 18 was intercepted; (ii) an interface parameter whose value indicates an interface used by the network device to provide data 18 to the network mediation device 22; (iii) a parameter whose value indicates a name of the CSP or the communication network 10 within which the network device is deployed; and (iv) a country parameter whose value indicates a country within which the data 18 was intercepted. In this case, then, the information 28 in the network mediation device 22 comprises a first combination 32-1 of values for the identifying parameters, including a value 32-1a for the device parameter, a value 32-1b for the interface parameter, a value 32-1c for the provider/network parameter, and a value 32-1d for the country parameter. The information 28 maps this first combination 32-1 of values for the identifying parameters to a value V-1 for the field 24 that is equal to a hash of the concatenation of those values 32-1a, 32-1b, 32-1c, and 32-1d. The information 28 maps one or more other combinations of values for the identifying parameters to one or more other values for the field 24 in a similar way, e.g., as shown for POI-N.

Some embodiments herein are applicable in the case where the handover interface 26 is specified by ETSI, e.g., according to ETSI TS 102 232 parts, ETSI TS 103 120, and ETSI TS 103 221-1 defining the data 18 intercepted per service (e.g., Messaging services, L2 services, Internet Access Service, IP Multimedia and Mobile services). In one or more such embodiments, the field 24 herein may be an InterceptionPointID field within a PSHeader as specified by ETSI TS 102 232 parts. The value of the interceptionPointID field may be set as described above to identify the POI 20 which intercepted data 18, regardless of the service for which data was intercepted in the communication network 10 and/or regardless of network conditions. In some embodiments as described below, the network mediation device 22 is exemplified as implementing an MDF and the lawful interception administrative device 30 is exemplified as implementing an ADMF.

In some embodiments, for example, the MDF receives intercepted data 18 from the POI 20 and labels the intercepted data 18 with a PSHeader as shown below, with the intercepted data 18 constituting the payload of the PS-PDU.

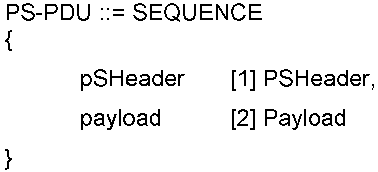

In some embodiments, the PSHeader is as shown below, where the field 24 is the interceptionPointlD field:

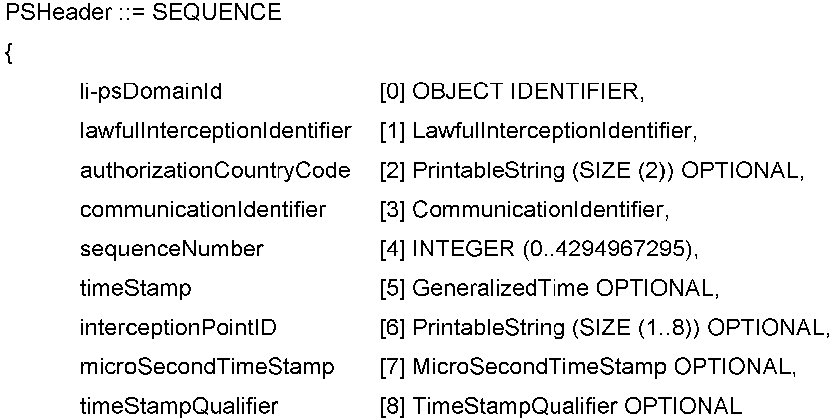

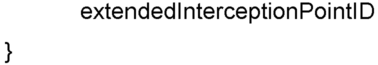

Note in this regard that the interceptionPointlD field as an implementation of the field 24 may be distinguished from a Network Element ID (NEID) field as specified by ETSI TS 102 232 parts. The NEID field by contrast may identify the MDF.

Furthermore, the interceptionPointID field may be distinguished from an Network Function ID (NFID) field and an extended InterceptionPointID (IPID) field on the handover interface, as the network mediation device 22 may naively set the values of these fields to whatever values the POI 20 indicates (if at all) to the MDF on the interface 17 (e.g., X2/X3 interface), e.g., according to ETSI TS 103 221-2. Moreover, the MDF may only receive such values from the POI 20 when the data 18 intercepted is for mobile services (TS 102 232-7) and when the POI 20 supports such signaling. In fact, both the NFID field and the extended IPID field may be optional, e.g., according to TS 103 221-2, even when transferring the 3GPP TS 33.128 payload. In one or more such embodiments, the PSHeader may be as shown below, with the field 24 being the interceptionPointlD field as before:

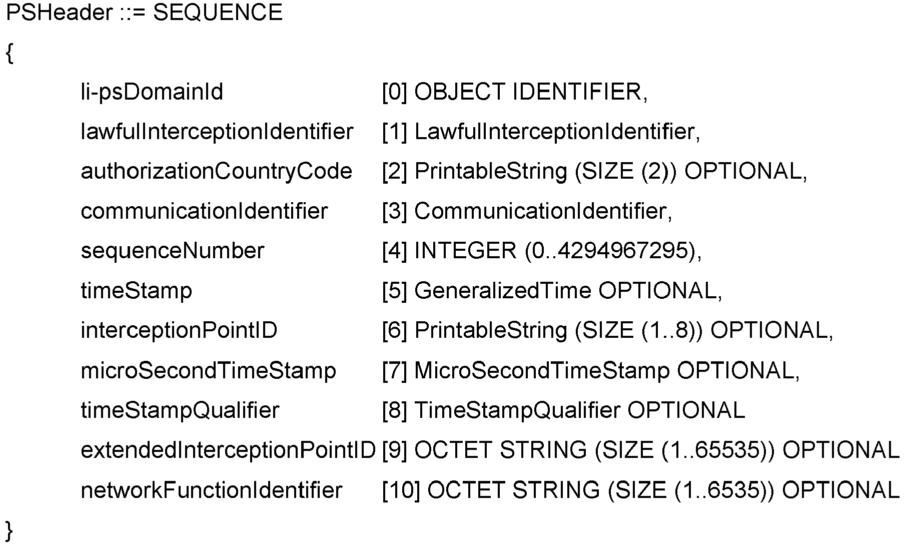

In one or more embodiments where the field 24 is the interceptionPointlD field in the PSHeader on the handover interface, the value of the interceptionPointlD field will contain or indicate all information needed to recognize the origin of the interception data. The value of the interceptionPointID field may for instance indicate (1) the country where the LI system is deployed; (2) the name of the CSP; (3) the name of the Network Virtual Function as specified in LI system; and (4) the point of interception within the Network Virtual Function. interceptionPointID field may thereby be used by the law enforcement monitoring facility 16 to recognize if the received intercepted data 18 has been provided by the same origin in a near real time fashion.

Certain embodiments may provide one or more of the following technical advantage(s). For the operator (CSP), some embodiments identify the POI 20 to the law enforcement monitoring facility 16 acting only on the MDF in the CSP domain, i.e., not relying on the availability of the related parameters over X interface. For example, the value of the inerceptionPointID parameter may be guaranteed even in case of missing related information on the X interface with the POI 20 and/or in case of a non-standard X interface with the POI 20. Alternatively or additionally, some embodiments identify the POI 20 to the law enforcement monitoring facility 16 regardless of the interception domain conditions and/or regardless of the type of service for which the data 18 is intercepted (e.g., regarding of mobile services or not).

More particularly, some embodiments exploit ADMF and MDF functions which communicate over an X1 interface (ETSI TS 103 221-1). The ADMF function is in charge of warrant administration and for this reason it needs to know in advance the network topology involved in the interception scenarios. The network topology can be manually defined by the operator or it can be automatically configured by the LI-NFV controller once the Network Function is instantiated (ETSI GR NFV SEC-011). The MDF function is responsible to provide interception data over the handover interface 26, e.g., according to ETSI and 3GPP standards.

In this context, some embodiments define a value for the "interceptionPointID" parameter (in the PSHeader on the handover interface 26) that is based on information handled by the ADMF and MDF functions; in particular, (i) the country where the LI system is deployed (two digits according to "ISO 3166-1 alpha-2" standard); (ii) the name of the CSP defined in the ADMF function in terms of a sequence of strings (i.e., "operator1", "operator2"); (iii) the name of the Network Virtual Function acting as Point Of Interception (where the name is defined by ADMF function in LI system (i.e., "AMF1", "AMF2", "SMF1", "SMF2")); and (iv) Point Of Interception (POI) which may be the IP address and port number used by the Point Of Interception function to provide interception data to LI system (i.e., "10.10.10.10:2345"). In some embodiments, the value of the interceptionPointlD field itself explicitly indicates the values of (i)-(iv). In other embodiments, by contrast, the value of the interceptionPointlD field is simply based on the values of (i)-(iv), such that the interceptionPointID field has different values for different combinations of values for (i)-(iv). These latter embodiments may be appropriate for instance where the law enforcement monitoring facility 16 is mainly interested in quickly recognizing the origin of incoming HI2 traffic in order to group the traffic accordingly, such that it the law enforcement monitoring facility 16 is not so much interested in the actual values for (i)-(iv) as it is in recognizing different combinations of values for (i)-(iv).

In one or more such embodiments, the MDF stores information 28 in the form of a memory mapping table, called "LiDataOriginTable", as exemplified in Table1 below:

**TABLE 1**

| **Country** | **Operator** | **Node** | **Point of Interception** | **interceptionPointID** |
|---|---|---|---|---|
| IT | Operator1 | AMF1 | 10.10.10.10:1234 | 2F9AC3CE |
| IT | Operator1 | AMF1 | 10.10.10.11:1234 | E4C6106B |
| IT | Operator1 | AMF1 | 10.10.10.12:1235 | 15555253 |
| IT | Operator1 | AMF2 | 10.10.10.12:1235 | 46CF09D7 |
| IT | Operator1 | AMF2 | 10.10.10.13:1235 | 8D93DA72 |
| IT | Operator2 | AMF2 | 10.10.10.13:1235 | F68D5891 |
| IT | Operator2 | AMF1 | 10.10.10.13:1235 | A5170315 |
| IT | Operator3 | SMF1 | 10.10.10.14:1235 | ODC06D9A |

The value of the interceptionPointlD field is a hexadecimal value without 0x prefix and it is the result of a CRC-32 function applied to the string composed by country, operator, node, poi without a separation character as reported below:
CRC-32(countryoperatornodepoi) = 0x7B4337C6
CRC-32(ITOperator1AMF110.10.10.10:1234) = 0x2F9AC3CE

The function output is saved as a string in the interceptionPointID column without "0x" prefix. The Cyclic Redundancy Check (CRC) function guarantees the uniqueness of the output with the same input. In addition, the CRC-32 function guarantees an 8 character length string value as required by the ETSI standard.

In some embodiments, the parameters of Table 1, except the interceptionPointlD field, are known at network topology configuration in the ADMF. In one such embodiment, these parameters are changed upon and according to network modification. With the network topology definition being a prerequisite for LI, the ADMF in some embodiments herein is in charge of creating and modifying the LiDataOriginTable table at the network topology definition and its modification. The table is shared among MDFs in the communication network 10 for consultation once LI traffic is intercepted.

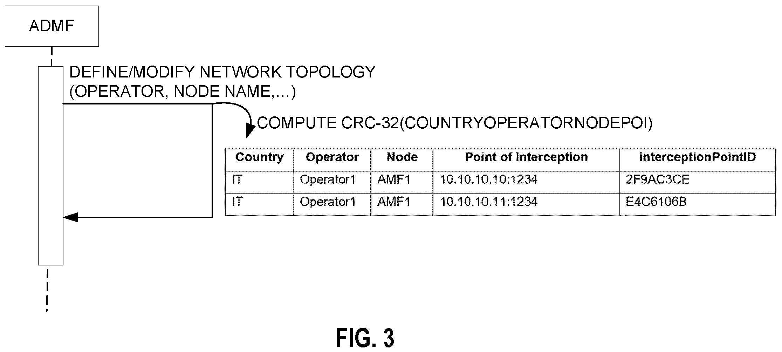

Figure 3 shows one example of how the ADMF creates and modifies the "LiDataOriginTable" according to some embodiments. As shown, upon the definition or modification of the network topology, the ADMF computes the interceptionPointlD for the combination of values (country, operator, node, point of interception) using a CRC-32 function.

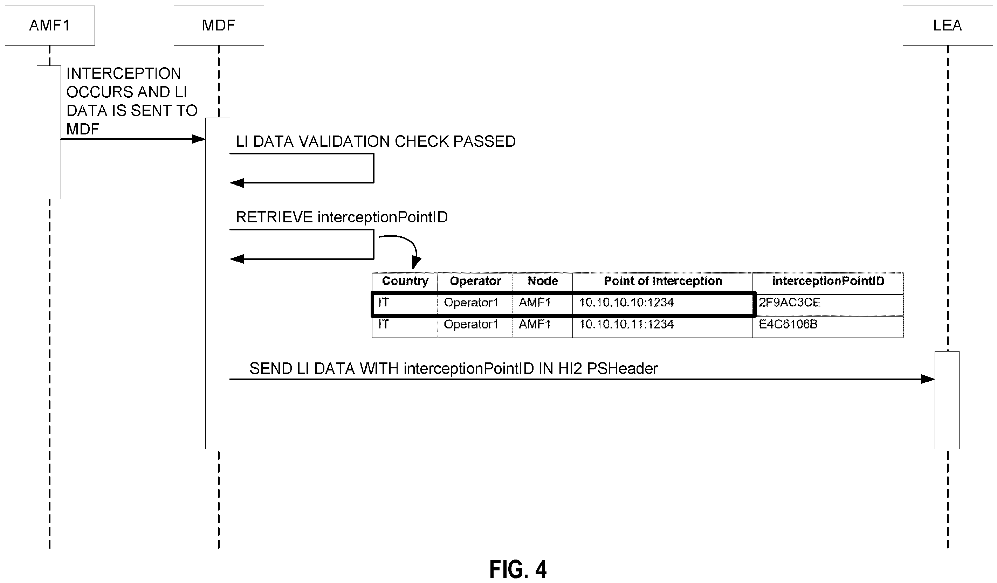

Figure 4 shows use of the LiDataOriginTable by the MDF under normal operation according to some embodiments. As shown, an AMF1 intercepts data 18 and sends the intercepted data to the MDF. The MDF validates the intercepted data based on the network topology in order to avoid unauthorized interception. The MDF may for example validate that the intercepted data 18 was intercepted by a valid node (AMF1) in terms of IP address and port according to the defined network topology. The MDF may alternatively or additionally validate that the intercepted data 18 was intercepted based on a valid warrant.

During or after the validation check, the MDF retrieves all of the needed information to build the key for the LiDataOriginTable table: country, operator, node and Point Of Interception. The key is used to direct access the table and uniquely retrieve the value of interceptionPoindlD field. The MDF uses such value, together with the other relevant LI data, to fill the PSHeader in the HI2 packet. The MDF then sends the HI2 packet to the law enforcement monitoring facility 16, shown in Figure 4 as a law enforcement agency (LEA).

Note that, in some embodiments, the law enforcement monitoring facility 16 simply groups intercepted data 18 (in the form of PDUs) based on the POI 20 which intercepted that data 18. In this case, the law enforcement monitoring facility 16 need not determine the combination of values for country, operator, node, and point of interception fields which correspond to the interceptionPointlD field received from the MDF. In other embodiments, though, the law enforcement monitoring facility 16 may actually obtain the combination of values for country, operator, node, and point of interception fields which correspond to the interceptionPointlD field received from the MDF. For example, based on the actual requirements common to European LEAs, the ETSI e-warrant interface (ETSI TS 103 120) may be enhanced to manage the request and response dialogue between LEA and CSP to provide LEA with all relevant information to identify the internal NE/NF POls entities based on values of the above interceptionPointlD received by LEA on HI. This ETSI enhancement may guarantee backward compatibility aspects. In one such embodiment, the LEA can interrogate "LiDataOriginTable" via HI1 interface in order to fetch the details of the origin of the interception in terms of [country, operator, node, poi] according to investigation needs.

Advantageously, some embodiments herein do not introduce delay in LI processing and/or delivery. Indeed, in some embodiments, the ADMF creates the LiDataOriginTable table at customer network topology definition. Once a node is deployed in the communication network 10, the operator needs to define it also on the LI system specifying several parameters included the Country, the Operator, the name of the Node and the Point Of Interception fields. In some embodiments, then, the creation of the table is not performed during LI operation, meaning that table creation does not introduce delay during operation.

Moreover, the consultation of the table performed by the MDF during LI operation is intended to not affect LI delivery performance in some embodiments, since the key to direct access the table is already retrieved at data validation checks.

Furthermore, the table in some embodiments is permanently stored in the ADMF and the table may be loaded in memory by the MDF for faster consultation.

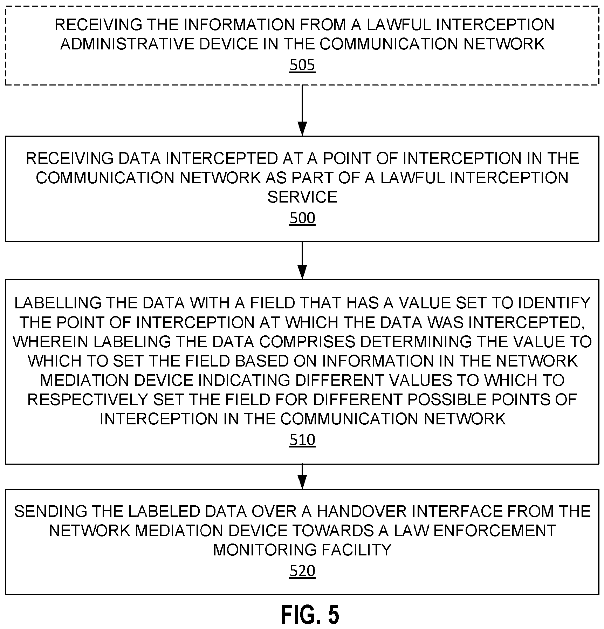

In view of the modifications and variations herein, Figure 5 depicts a method performed by a network mediation device 22 in a communication network 10 of a communication service provider in accordance with particular embodiments. The method includes receiving data 18 intercepted at a point of interception 20 in the communication network 10 as part of a lawful interception service (Block 500). The method also comprises labelling the data 18 with a field 24 that has a value set to identify the point of interception 20 at which the data 18 was intercepted (Block 510). In some embodiments, labeling the data 18 comprises determining the value to which to set the field 24 based on information 28 in the network mediation device 22 indicating different values to which to respectively set the field 24 for different possible points of interception in the communication network 10 (Block 510). The method further comprises sending the labeled data over a handover interface 26 from the network mediation device 22 towards a law enforcement monitoring facility 16 (Block 520).

In some embodiments, the method comprises receiving the information 28 from a lawful interception administrative device 30 in the communication network 10 (Block 505).

In some embodiments, the value to which to set the field 24 is determined based on a name of a network device at which the data 18 was intercepted, and an interface used by the network device to provide the data 18 to the network mediation device 22. In one or more of these embodiments, the value to which to set the field 24 is determined based also on a name of the communication service provider or the communication network 10 within which the network device is deployed, and a country within which the data 18 was intercepted.

In some embodiments, the information 28 in the network mediation device 22 maps different possible combinations of values for identifying parameters to different possible values for the field 24, and the different possible combinations of values for the identifying parameters are respectively associated with the different possible points of interception in the communication network 10. In one such embodiment, labeling the data 18 comprises determining which combination of values for the identifying parameters is associated with the point of interception 20 at which the data 18 was intercepted, consulting the information 28 in the network mediation device 22 to determine which possible value for the field 24 is mapped to the determined combination of values, and setting the value of the field 24 to the determined value. In one or more of these embodiments, the identifying parameters include a device parameter whose value indicates a name of a network device at which the data 18 was intercepted, an interface parameter whose value indicates an interface used by the network device to provide the data 18 to the network mediation device 22, a parameter whose value indicates a name of the communication service provider or the communication network 10 within which the network device is deployed, and a country parameter whose value indicates a country within which the data 18 was intercepted. In one or more of these embodiments, for each of the different possible combinations of values for the identifying parameters, the possible value for the field 24 mapped to that possible combination of values for the identifying parameters is a hash of that possible combination of values. In one or more of these embodiments, the method further comprises receiving an asserted combination of values for the identifying parameters which is asserted as being associated with the point of interception 20 at which the data 18 was intercepted, validating the asserted combination of values as being a valid combination of values in the communication network 10, and based on validating the asserted combination of values, determining that the asserted combination of values for the identifying parameters is associated with the point of interception 20 at which the data 18 was intercepted.

In some embodiments, the field 24 is an interceptionPointlD field within a packet switched header.

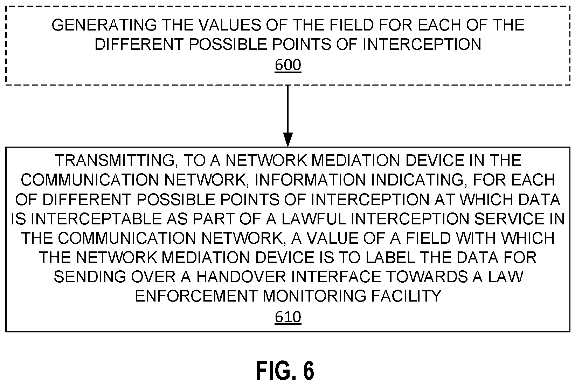

Figure 6 depicts a method performed by a lawful interception administrative device 30 in a communication network 10 of a communication service provider in accordance with other particular embodiments. The method includes transmitting, to a network mediation device 22 in the communication network 10, information 28 indicating, for each of different possible points of interception at which data 18 is interceptable as part of a lawful interception service in the communication network 10, a value of a field 24 with which the network mediation device 22 is to label the data 18 for sending over a handover interface 26 towards a law enforcement monitoring facility 16 (Block 610).

In some embodiments, the method also comprises generating the values of the field 24 for each of the different possible points of interception (Block 600).

In some embodiments, the value of the field 24 with which the network mediation device 22 is to label the data 18 is a function of a name of a network device at which the data 18 was intercepted, and an interface used by the network device to provide the data 18 to the network mediation device 22. In one or more of these embodiments, the value of the field 24 with which the network mediation device 22 is to label the data 18 is a function also of a name of the communication service provider or the communication network 10 within which the network device is deployed, and a country within which the data 18 was intercepted.

In some embodiments, the information 28 maps different possible combinations of values for identifying parameters to different possible values for the field 24, and the different possible combinations of values for the identifying parameters are respectively associated with the different possible points of interception in the communication network 10. In one or more of these embodiments, the identifying parameters include a device parameter whose value indicates a name of a network device at which the data 18 was intercepted, an interface parameter whose value indicates an interface used by the network device to provide the data 18 to the network mediation device 22, a parameter whose value indicates a name of the communication service provider or the communication network 10 within which the network device is deployed, and a country parameter whose value indicates a country within which the data 18 was intercepted. In one or more of these embodiments, the method further comprises generating, for each of the different possible combinations of values for the identifying parameters, the possible value for the field 24 mapped to that possible combination of values for the identifying parameters as a hash of that possible combination of values.

In some embodiments, the field 24 is an interceptionPointlD field within a packet switched header.

Embodiments herein also include corresponding apparatuses. Embodiments herein for instance include a network mediation device 22 configured to perform any of the steps of any of the embodiments described above for the network mediation device 22.

Embodiments also include a network mediation device 22 comprising processing circuitry and power supply circuitry. The processing circuitry is configured to perform any of the steps of any of the embodiments described above for the network mediation device 22. The power supply circuitry is configured to supply power to the network mediation device 22.

Embodiments further include a network mediation device 22 comprising processing circuitry. The processing circuitry is configured to perform any of the steps of any of the embodiments described above for the network mediation device 22. In some embodiments, the network mediation device 22 further comprises communication circuitry.

Embodiments further include a network mediation device 22 comprising processing circuitry and memory. The memory contains instructions executable by the processing circuitry whereby the network mediation device 22 is configured to perform any of the steps of any of the embodiments described above for the network mediation device 22.

Embodiments herein also include a lawful interception administrative device 30 configured to perform any of the steps of any of the embodiments described above for the lawful interception administrative device 30.

Embodiments also include a lawful interception administrative device 30 comprising processing circuitry and power supply circuitry. The processing circuitry is configured to perform any of the steps of any of the embodiments described above for the lawful interception administrative device 30. The power supply circuitry is configured to supply power to the lawful interception administrative device 30.

Embodiments further include a lawful interception administrative device 30 comprising processing circuitry. The processing circuitry is configured to perform any of the steps of any of the embodiments described above for the lawful interception administrative device 30. In some embodiments, the lawful interception administrative device 30 further comprises communication circuitry.

Embodiments further include a lawful interception administrative device 30 comprising processing circuitry and memory. The memory contains instructions executable by the processing circuitry whereby the lawful interception administrative device 30 is configured to perform any of the steps of any of the embodiments described above for the lawful interception administrative device 30.

More particularly, the apparatuses described above may perform the methods herein and any other processing by implementing any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

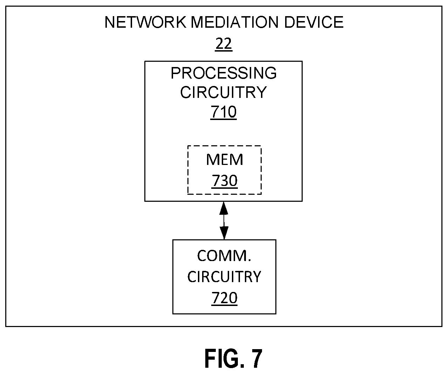

Figure 7 for example illustrates a network mediation device 22 as implemented in accordance with one or more embodiments. As shown, the network mediation device 22 includes processing circuitry 710 and communication circuitry 720. The communication circuitry 720 (e.g., radio circuitry) is configured to transmit and/or receive information to and/or from one or more other nodes, e.g., via any communication technology. Such communication may occur via one or more antennas that are either internal or external to the network mediation device 22. The processing circuitry 710 is configured to perform processing described above, e.g., in Figure 5, such as by executing instructions stored in memory 730. The processing circuitry 710 in this regard may implement certain functional means, units, or modules.

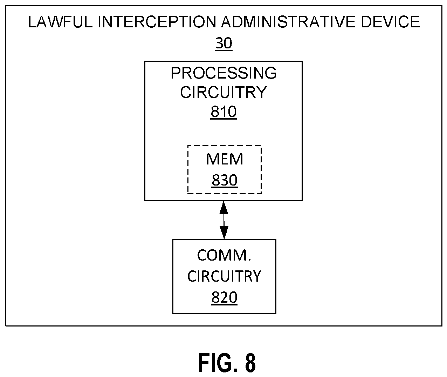

Figure 8 illustrates a lawful interception administrative device 30 as implemented in accordance with one or more embodiments. As shown, the lawful interception administrative device 30 includes processing circuitry 810 and communication circuitry 820. The communication circuitry 820 is configured to transmit and/or receive information to and/or from one or more other nodes, e.g., via any communication technology. The processing circuitry 810 is configured to perform processing described above, e.g., in Figure 6, such as by executing instructions stored in memory 830. The processing circuitry 810 in this regard may implement certain functional means, units, or modules.

Those skilled in the art will also appreciate that embodiments herein further include corresponding computer programs.

A computer program comprises instructions which, when executed on at least one processor of a network mediation device 22, cause the network mediation device 22 to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of a network mediation device 22, cause the network mediation device 22 to perform as described above.

Embodiments further include a computer program product comprising program code portions for performing the steps of any of the embodiments herein when the computer program product is executed by a network mediation device 22. This computer program product may be stored on a computer readable recording medium.

A computer program comprises instructions which, when executed on at least one processor of a lawful interception administrative device 30, cause the lawful interception administrative device 30 to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of a lawful interception administrative device 30, cause the lawful interception administrative device 30 to perform as described above.

Embodiments further include a computer program product comprising program code portions for performing the steps of any of the embodiments herein when the computer program product is executed by a lawful interception administrative device 30. This computer program product may be stored on a computer readable recording medium.

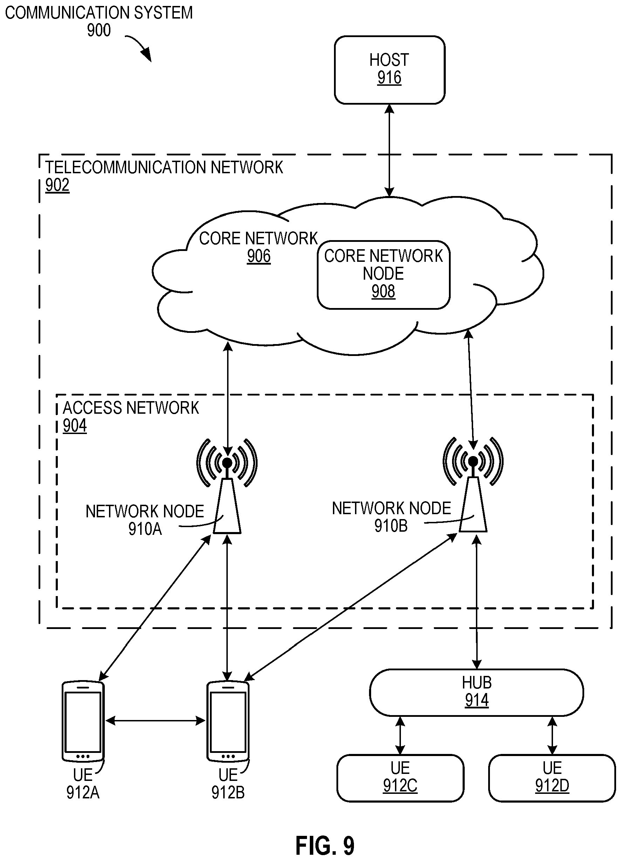

Figure 9 shows an example of a communication system 900 in accordance with some embodiments.

In the example, the communication system 900 includes a telecommunication network 902 that includes an access network 904, such as a radio access network (RAN), and a core network 906, which includes one or more core network nodes 908. The access network 904 includes one or more access network nodes, such as network nodes 910a and 910b (one or more of which may be generally referred to as network nodes 910), or any other similar 3^{rd} Generation Partnership Project (3GPP) access node or non-3GPP access point. The network nodes 910 facilitate direct or indirect connection of user equipment (UE), such as by connecting UEs 912a, 912b, 912c, and 912d (one or more of which may be generally referred to as UEs 912) to the core network 906 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 900 may include any number of wired or wireless networks, network nodes, UEs, and/or any other components or systems that may facilitate or participate in the communication of data and/or signals whether via wired or wireless connections. The communication system 900 may include and/or interface with any type of communication, telecommunication, data, cellular, radio network, and/or other similar type of system.

The UEs 912 may be any of a wide variety of communication devices, including wireless devices arranged, configured, and/or operable to communicate wirelessly with the network nodes 910 and other communication devices. Similarly, the network nodes 910 are arranged, capable, configured, and/or operable to communicate directly or indirectly with the UEs 912 and/or with other network nodes or equipment in the telecommunication network 902 to enable and/or provide network access, such as wireless network access, and/or to perform other functions, such as administration in the telecommunication network 902.

In the depicted example, the core network 906 connects the network nodes 910 to one or more hosts, such as host 916. These connections may be direct or indirect via one or more intermediary networks or devices. In other examples, network nodes may be directly coupled to hosts. The core network 906 includes one more core network nodes (e.g., core network node 908) that are structured with hardware and software components. Features of these components may be substantially similar to those described with respect to the UEs, network nodes, and/or hosts, such that the descriptions thereof are generally applicable to the corresponding components of the core network node 908. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host 916 may be under the ownership or control of a service provider other than an operator or provider of the access network 904 and/or the telecommunication network 902, and may be operated by the service provider or on behalf of the service provider. The host 916 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 900 of Figure 9 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network 902 is a cellular network that implements 3GPP standardized features. Accordingly, the telecommunications network 902 may support network slicing to provide different logical networks to different devices that are connected to the telecommunication network 902. For example, the telecommunications network 902 may provide Ultra Reliable Low Latency Communication (URLLC) services to some UEs, while providing Enhanced Mobile Broadband (eMBB) services to other UEs, and/or Massive Machine Type Communication (mMTC)/Massive loT services to yet further UEs.

In some examples, the UEs 912 are configured to transmit and/or receive information without direct human interaction. For instance, a UE may be designed to transmit information to the access network 904 on a predetermined schedule, when triggered by an internal or external event, or in response to requests from the access network 904. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In the example, the hub 914 communicates with the access network 904 to facilitate indirect communication between one or more UEs (e.g., UE 912c and/or 912d) and network nodes (e.g., network node 910b). In some examples, the hub 914 may be a controller, router, content source and analytics, or any of the other communication devices described herein regarding UEs. For example, the hub 914 may be a broadband router enabling access to the core network 906 for the UEs. As another example, the hub 914 may be a controller that sends commands or instructions to one or more actuators in the UEs. Commands or instructions may be received from the UEs, network nodes 910, or by executable code, script, process, or other instructions in the hub 914. As another example, the hub 914 may be a data collector that acts as temporary storage for UE data and, in some embodiments, may perform analysis or other processing of the data. As another example, the hub 914 may be a content source. For example, for a UE that is a VR headset, display, loudspeaker or other media delivery device, the hub 914 may retrieve VR assets, video, audio, or other media or data related to sensory information via a network node, which the hub 914 then provides to the UE either directly, after performing local processing, and/or after adding additional local content. In still another example, the hub 914 acts as a proxy server or orchestrator for the UEs, in particular in if one or more of the UEs are low energy loT devices.

The hub 914 may have a constant/persistent or intermittent connection to the network node 910b. The hub 914 may also allow for a different communication scheme and/or schedule between the hub 914 and UEs (e.g., UE 912c and/or 912d), and between the hub 914 and the core network 906. In other examples, the hub 914 is connected to the core network 906 and/or one or more UEs via a wired connection. Moreover, the hub 914 may be configured to connect to an M2M service provider over the access network 904 and/or to another UE over a direct connection. In some scenarios, UEs may establish a wireless connection with the network nodes 910 while still connected via the hub 914 via a wired or wireless connection. In some embodiments, the hub 914 may be a dedicated hub - that is, a hub whose primary function is to route communications to/from the UEs from/to the network node 910b. In other embodiments, the hub 914 may be a non-dedicated hub - that is, a device which is capable of operating to route communications between the UEs and network node 910b, but which is additionally capable of operating as a communication start and/or end point for certain data channels.

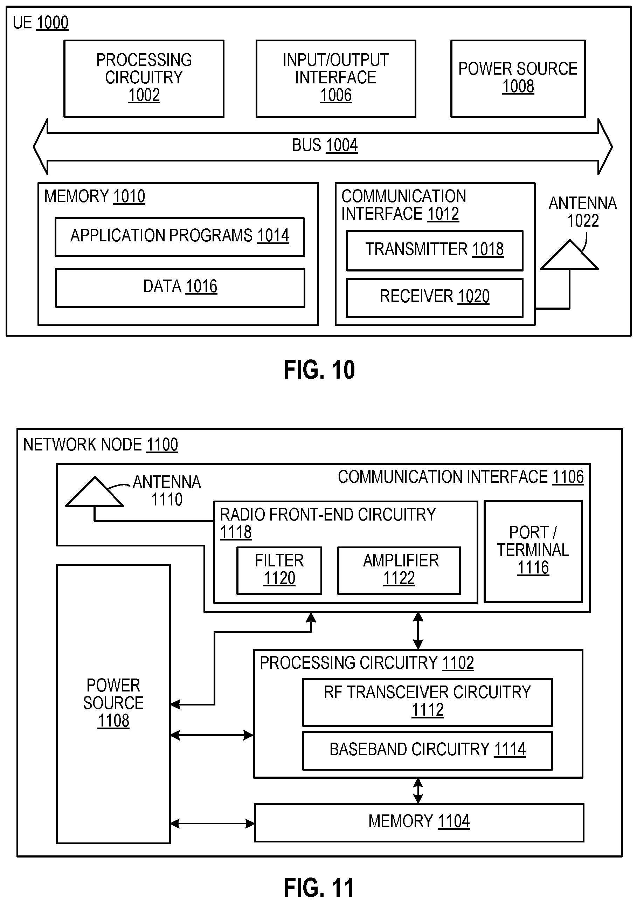

Figure 10 shows a UE 1000 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VolP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 1000 includes processing circuitry 1002 that is operatively coupled via a bus 1004 to an input/output interface 1006, a power source 1008, a memory 1010, a communication interface 1012, and/or any other component, or any combination thereof. Certain UEs may utilize all or a subset of the components shown in Figure 10. The level of integration between the components may vary from one UE to another UE. Further, certain UEs may contain multiple instances of a component, such as multiple processors, memories, transceivers, transmitters, receivers, etc.

The processing circuitry 1002 is configured to process instructions and data and may be configured to implement any sequential state machine operative to execute instructions stored as machine-readable computer programs in the memory 1010. The processing circuitry 1002 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 1002 may include multiple central processing units (CPUs).

In the example, the input/output interface 1006 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 1000. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 1008 is structured as a battery or battery pack. Other types of power sources, such as an external power source (e.g., an electricity outlet), photovoltaic device, or power cell, may be used. The power source 1008 may further include power circuitry for delivering power from the power source 1008 itself, and/or an external power source, to the various parts of the UE 1000 via input circuitry or an interface such as an electrical power cable. Delivering power may be, for example, for charging of the power source 1008. Power circuitry may perform any formatting, converting, or other modification to the power from the power source 1008 to make the power suitable for the respective components of the UE 1000 to which power is supplied.

The memory 1010 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 1010 includes one or more application programs 1014, such as an operating system, web browser application, a widget, gadget engine, or other application, and corresponding data 1016. The memory 1010 may store, for use by the UE 1000, any of a variety of various operating systems or combinations of operating systems.

The memory 1010 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 1010 may allow the UE 1000 to access instructions, application programs and the like, stored on transitory or non-transitory memory media, to off-load data, or to upload data. An article of manufacture, such as one utilizing a communication system may be tangibly embodied as or in the memory 1010, which may be or comprise a device-readable storage medium.

The processing circuitry 1002 may be configured to communicate with an access network or other network using the communication interface 1012. The communication interface 1012 may comprise one or more communication subsystems and may include or be communicatively coupled to an antenna 1022. The communication interface 1012 may include one or more transceivers used to communicate, such as by communicating with one or more remote transceivers of another device capable of wireless communication (e.g., another UE or a network node in an access network). Each transceiver may include a transmitter 1018 and/or a receiver 1020 appropriate to provide network communications (e.g., optical, electrical, frequency allocations, and so forth). Moreover, the transmitter 1018 and receiver 1020 may be coupled to one or more antennas (e.g., antenna 1022) and may share circuit components, software or firmware, or alternatively be implemented separately.

In the illustrated embodiment, communication functions of the communication interface 1012 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 1012, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an loT device comprises circuitry and/or software in dependence of the intended application of the loT device in addition to other components as described in relation to the UE 1000 shown in Figure 10.

As yet another specific example, in an loT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-loT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g. by controlling an actuator) to increase or decrease the drone's speed. The first and/or the second UE can also include more than one of the functionalities described above. For example, a UE might comprise the sensor and the actuator, and handle communication of data for both the speed sensor and the actuators.

Figure 11 shows a network node 1100 in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs) and NR NodeBs (gNBs)).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 1100 includes a processing circuitry 1102, a memory 1104, a communication interface 1106, and a power source 1108. The network node 1100 may be composed of multiple physically separate components (e.g., a NodeB component and a RNC component, or a BTS component and a BSC component, etc.), which may each have their own respective components. In certain scenarios in which the network node 1100 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 1100 may be configured to support multiple radio access technologies (RATs). In such embodiments, some components may be duplicated (e.g., separate memory 1104 for different RATs) and some components may be reused (e.g., a same antenna 1110 may be shared by different RATs). The network node 1100 may also include multiple sets of the various illustrated components for different wireless technologies integrated into network node 1100, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 1100.

The processing circuitry 1102 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1100 components, such as the memory 1104, to provide network node 1100 functionality.

In some embodiments, the processing circuitry 1102 includes a system on a chip (SOC). In some embodiments, the processing circuitry 1102 includes one or more of radio frequency (RF) transceiver circuitry 1112 and baseband processing circuitry 1114. In some embodiments, the radio frequency (RF) transceiver circuitry 1112 and the baseband processing circuitry 1114 may be on separate chips (or sets of chips), boards, or units, such as radio units and digital units. In alternative embodiments, part or all of RF transceiver circuitry 1112 and baseband processing circuitry 1114 may be on the same chip or set of chips, boards, or units.

The memory 1104 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 1102. The memory 1104 may store any suitable instructions, data, or information, including a computer program, software, an application including one or more of logic, rules, code, tables, and/or other instructions capable of being executed by the processing circuitry 1102 and utilized by the network node 1100. The memory 1104 may be used to store any calculations made by the processing circuitry 1102 and/or any data received via the communication interface 1106. In some embodiments, the processing circuitry 1102 and memory 1104 is integrated.

The communication interface 1106 is used in wired or wireless communication of signaling and/or data between a network node, access network, and/or UE. As illustrated, the communication interface 1106 comprises port(s)/terminal(s) 1116 to send and receive data, for example to and from a network over a wired connection. The communication interface 1106 also includes radio front-end circuitry 1118 that may be coupled to, or in certain embodiments a part of, the antenna 1110. Radio front-end circuitry 1118 comprises filters 1120 and amplifiers 1122. The radio front-end circuitry 1118 may be connected to an antenna 1110 and processing circuitry 1102. The radio front-end circuitry may be configured to condition signals communicated between antenna 1110 and processing circuitry 1102. The radio front-end circuitry 1118 may receive digital data that is to be sent out to other network nodes or UEs via a wireless connection. The radio front-end circuitry 1118 may convert the digital data into a radio signal having the appropriate channel and bandwidth parameters using a combination of filters 1120 and/or amplifiers 1122. The radio signal may then be transmitted via the antenna 1110. Similarly, when receiving data, the antenna 1110 may collect radio signals which are then converted into digital data by the radio front-end circuitry 1118. The digital data may be passed to the processing circuitry 1102. In other embodiments, the communication interface may comprise different components and/or different combinations of components.

In certain alternative embodiments, the network node 1100 does not include separate radio front-end circuitry 1118, instead, the processing circuitry 1102 includes radio front-end circuitry and is connected to the antenna 1110. Similarly, in some embodiments, all or some of the RF transceiver circuitry 1112 is part of the communication interface 1106. In still other embodiments, the communication interface 1106 includes one or more ports or terminals 1116, the radio front-end circuitry 1118, and the RF transceiver circuitry 1112, as part of a radio unit (not shown), and the communication interface 1106 communicates with the baseband processing circuitry 1114, which is part of a digital unit (not shown).

The antenna 1110 may include one or more antennas, or antenna arrays, configured to send and/or receive wireless signals. The antenna 1110 may be coupled to the radio front-end circuitry 1118 and may be any type of antenna capable of transmitting and receiving data and/or signals wirelessly. In certain embodiments, the antenna 1110 is separate from the network node 1100 and connectable to the network node 1100 through an interface or port.

The antenna 1110, communication interface 1106, and/or the processing circuitry 1102 may be configured to perform any receiving operations and/or certain obtaining operations described herein as being performed by the network node. Any information, data and/or signals may be received from a UE, another network node and/or any other network equipment. Similarly, the antenna 1110, the communication interface 1106, and/or the processing circuitry 1102 may be configured to perform any transmitting operations described herein as being performed by the network node. Any information, data and/or signals may be transmitted to a UE, another network node and/or any other network equipment.

The power source 1108 provides power to the various components of network node 1100 in a form suitable for the respective components (e.g., at a voltage and current level needed for each respective component). The power source 1108 may further comprise, or be coupled to, power management circuitry to supply the components of the network node 1100 with power for performing the functionality described herein. For example, the network node 1100 may be connectable to an external power source (e.g., the power grid, an electricity outlet) via an input circuitry or interface such as an electrical cable, whereby the external power source supplies power to power circuitry of the power source 1108. As a further example, the power source 1108 may comprise a source of power in the form of a battery or battery pack which is connected to, or integrated in, power circuitry. The battery may provide backup power should the external power source fail.

Embodiments of the network node 1100 may include additional components beyond those shown in Figure 11 for providing certain aspects of the network node's functionality, including any of the functionality described herein and/or any functionality necessary to support the subject matter described herein. For example, the network node 1100 may include user interface equipment to allow input of information into the network node 1100 and to allow output of information from the network node 1100. This may allow a user to perform diagnostic, maintenance, repair, and other administrative functions for the network node 1100.

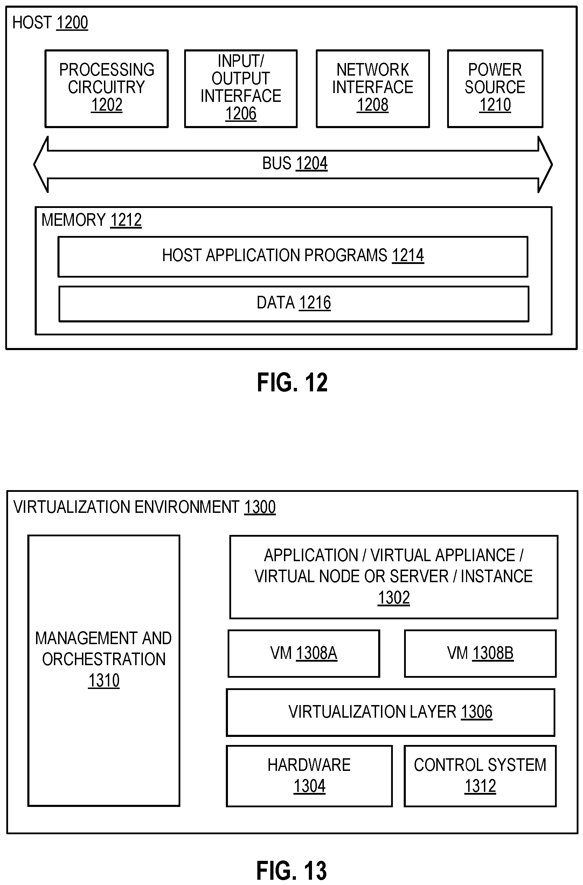

Figure 12 is a block diagram of a host 1200, which may be an embodiment of the host 916 of Figure 9, in accordance with various aspects described herein. As used herein, the host 1200 may be or comprise various combinations hardware and/or software, including a standalone server, a blade server, a cloud-implemented server, a distributed server, a virtual machine, container, or processing resources in a server farm. The host 1200 may provide one or more services to one or more UEs.

The host 1200 includes processing circuitry 1202 that is operatively coupled via a bus 1204 to an input/output interface 1206, a network interface 1208, a power source 1210, and a memory 1212. Other components may be included in other embodiments. Features of these components may be substantially similar to those described with respect to the devices of previous figures, such as Figures 10 and 11, such that the descriptions thereof are generally applicable to the corresponding components of host 1200.

The memory 1212 may include one or more computer programs including one or more host application programs 1214 and data 1216, which may include user data, e.g., data generated by a UE for the host 1200 or data generated by the host 1200 for a UE. Embodiments of the host 1200 may utilize only a subset or all of the components shown. The host application programs 1214 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 1214 may also provide for user authentication and licensing checks and may periodically report health, routes, and content availability to a central node, such as a device in or on the edge of a core network. Accordingly, the host 1200 may select and/or indicate a different host for over-the-top services for a UE. The host application programs 1214 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

Figure 13 is a block diagram illustrating a virtualization environment 1300 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 1300 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 1302 (which may alternatively be called software instances, virtual appliances, network functions, virtual nodes, virtual network functions, etc.) are run in the virtualization environment Q400 to implement some of the features, functions, and/or benefits of some of the embodiments disclosed herein.

Hardware 1304 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 1306 (also referred to as hypervisors or virtual machine monitors (VMMs)), provide VMs 1308a and 1308b (one or more of which may be generally referred to as VMs 1308), and/or perform any of the functions, features and/or benefits described in relation with some embodiments described herein. The virtualization layer 1306 may present a virtual operating platform that appears like networking hardware to the VMs 1308.

The VMs 1308 comprise virtual processing, virtual memory, virtual networking or interface and virtual storage, and may be run by a corresponding virtualization layer 1306. Different embodiments of the instance of a virtual appliance 1302 may be implemented on one or more of VMs 1308, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 1308 may be a software implementation of a physical machine that runs programs as if they were executing on a physical, non-virtualized machine. Each of the VMs 1308, and that part of hardware 1304 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 1308 on top of the hardware 1304 and corresponds to the application 1302.

Hardware 1304 may be implemented in a standalone network node with generic or specific components. Hardware 1304 may implement some functions via virtualization. Alternatively, hardware 1304 may be part of a larger cluster of hardware (e.g. such as in a data center or CPE) where many hardware nodes work together and are managed via management and orchestration 1310, which, among others, oversees lifecycle management of applications 1302. In some embodiments, hardware 1304 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 1312 which may alternatively be used for communication between hardware nodes and radio units.

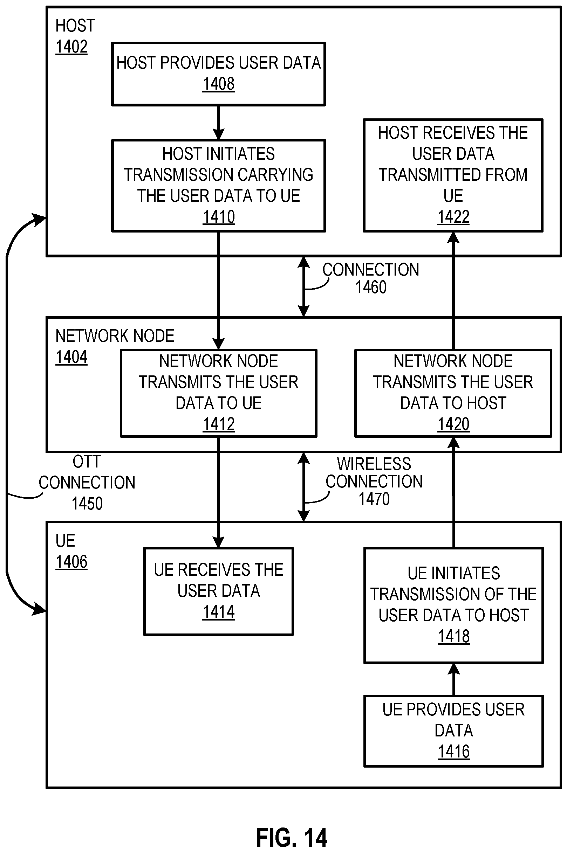

Figure 14 shows a communication diagram of a host 1402 communicating via a network node 1404 with a UE 1406 over a partially wireless connection in accordance with some embodiments. Example implementations, in accordance with various embodiments, of the UE (such as a UE 912a of Figure 9 and/or UE 1000 of Figure 10), network node (such as network node 910a of Figure 9 and/or network node 1100 of Figure 11), and host (such as host 916 of Figure 9 and/or host 1200 of Figure 12) discussed in the preceding paragraphs will now be described with reference to Figure 14.

Like host 1200, embodiments of host 1402 include hardware, such as a communication interface, processing circuitry, and memory. The host 1402 also includes software, which is stored in or accessible by the host 1402 and executable by the processing circuitry. The software includes a host application that may be operable to provide a service to a remote user, such as the UE 1406 connecting via an over-the-top (OTT) connection 1450 extending between the UE 1406 and host 1402. In providing the service to the remote user, a host application may provide user data which is transmitted using the OTT connection 1450.

The network node 1404 includes hardware enabling it to communicate with the host 1402 and UE 1406. The connection 1460 may be direct or pass through a core network (like core network 906 of Figure 9) and/or one or more other intermediate networks, such as one or more public, private, or hosted networks. For example, an intermediate network may be a backbone network or the Internet.

The UE 1406 includes hardware and software, which is stored in or accessible by UE 1406 and executable by the UE's processing circuitry. The software includes a client application, such as a web browser or operator-specific "app" that may be operable to provide a service to a human or non-human user via UE 1406 with the support of the host 1402. In the host 1402, an executing host application may communicate with the executing client application via the OTT connection 1450 terminating at the UE 1406 and host 1402. In providing the service to the user, the UE's client application may receive request data from the host's host application and provide user data in response to the request data. The OTT connection 1450 may transfer both the request data and the user data. The UE's client application may interact with the user to generate the user data that it provides to the host application through the OTT connection 1450.

The OTT connection 1450 may extend via a connection 1460 between the host 1402 and the network node 1404 and via a wireless connection 1470 between the network node 1404 and the UE 1406 to provide the connection between the host 1402 and the UE 1406. The connection 1460 and wireless connection 1470, over which the OTT connection 1450 may be provided, have been drawn abstractly to illustrate the communication between the host 1402 and the UE 1406 via the network node 1404, without explicit reference to any intermediary devices and the precise routing of messages via these devices.

As an example of transmitting data via the OTT connection 1450, in step 1408, the host 1402 provides user data, which may be performed by executing a host application. In some embodiments, the user data is associated with a particular human user interacting with the UE 1406. In other embodiments, the user data is associated with a UE 1406 that shares data with the host 1402 without explicit human interaction. In step 1410, the host 1402 initiates a transmission carrying the user data towards the UE 1406. The host 1402 may initiate the transmission responsive to a request transmitted by the UE 1406. The request may be caused by human interaction with the UE 1406 or by operation of the client application executing on the UE 1406. The transmission may pass via the network node 1404, in accordance with the teachings of the embodiments described throughout this disclosure. Accordingly, in step 1412, the network node 1404 transmits to the UE 1406 the user data that was carried in the transmission that the host 1402 initiated, in accordance with the teachings of the embodiments described throughout this disclosure. In step 1414, the UE 1406 receives the user data carried in the transmission, which may be performed by a client application executed on the UE 1406 associated with the host application executed by the host 1402.

In some examples, the UE 1406 executes a client application which provides user data to the host 1402. The user data may be provided in reaction or response to the data received from the host 1402. Accordingly, in step 1416, the UE 1406 may provide user data, which may be performed by executing the client application. In providing the user data, the client application may further consider user input received from the user via an input/output interface of the UE 1406. Regardless of the specific manner in which the user data was provided, the UE 1406 initiates, in step 1418, transmission of the user data towards the host 1402 via the network node 1404. In step 1420, in accordance with the teachings of the embodiments described throughout this disclosure, the network node 1404 receives user data from the UE 1406 and initiates transmission of the received user data towards the host 1402. In step 1422, the host 1402 receives the user data carried in the transmission initiated by the UE 1406.

One or more of the various embodiments improve the performance of OTT services provided to the UE 1406 using the OTT connection 1450, in which the wireless connection 1470 forms the last segment.

In an example scenario, factory status information may be collected and analyzed by the host 1402. As another example, the host 1402 may process audio and video data which may have been retrieved from a UE for use in creating maps. As another example, the host 1402 may collect and analyze real-time data to assist in controlling vehicle congestion (e.g., controlling traffic lights). As another example, the host 1402 may store surveillance video uploaded by a UE. As another example, the host 1402 may store or control access to media content such as video, audio, VR or AR which it can broadcast, multicast or unicast to UEs. As other examples, the host 1402 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency and other factors on which the one or more embodiments improve. There may further be an optional network functionality for reconfiguring the OTT connection 1450 between the host 1402 and UE 1406, in response to variations in the measurement results. The measurement procedure and/or the network functionality for reconfiguring the OTT connection may be implemented in software and hardware of the host 1402 and/or UE 1406. In some embodiments, sensors (not shown) may be deployed in or in association with other devices through which the OTT connection 1450 passes; the sensors may participate in the measurement procedure by supplying values of the monitored quantities exemplified above, or supplying values of other physical quantities from which software may compute or estimate the monitored quantities. The reconfiguring of the OTT connection 1450 may include message format, retransmission settings, preferred routing etc.; the reconfiguring need not directly alter the operation of the network node 1404. Such procedures and functionalities may be known and practiced in the art. In certain embodiments, measurements may involve proprietary UE signaling that facilitates measurements of throughput, propagation times, latency and the like, by the host 1402. The measurements may be implemented in that software causes messages to be transmitted, in particular empty or 'dummy' messages, using the OTT connection 1450 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

Notably, modifications and other embodiments of the disclosed invention(s) will come to mind to one skilled in the art having the benefit of the teachings presented in the foregoing descriptions and the associated drawings. Therefore, it is to be understood that the invention(s) is/are not to be limited to the specific embodiments disclosed and that modifications and other embodiments are intended to be included within the scope of this disclosure. Although specific terms may be employed herein, they are used in a generic and descriptive sense only and not for purposes of limitation. The scope of protection sought for is solely defined by the appended claims.

## Claims

1. A method performed by a network mediation device (22) in a communication network (10) of a communication service provider, the method comprising:
receiving (500) data (18) intercepted at a point of interception (20) in the communication network (10) as part of a lawful interception service;
labelling (510) the data (18) with a field (24) that has a value set to identify the point of interception (20) at which the data (18) was intercepted, wherein labeling the data (18) comprises determining the value to which to set the field (24) based on information (28) stored in the network mediation device (22) indicating different values to which to respectively set the field (24) for different possible points of interception in the communication network (10); and
sending (520) the labeled data (18L) over a handover interface (26) from the network mediation device (22) towards a law enforcement monitoring facility (16).

2. The method of claim 1, wherein determining the value comprises determining the value to which to set the field (24) based on:
a name of a network device at which the data (18) was intercepted; and
an interface used by the network device to provide the data (18) to the network mediation device (22).

3. The method of any one of claims 1-2, wherein the information (28) stored in the network mediation device (22) maps different possible combinations of values for identifying parameters to different possible values for the field (24), wherein the different possible combinations of values for the identifying parameters are respectively associated with the different possible points of interception in the communication network (10), and wherein labeling the data (18) comprises:
determining which combination of values for the identifying parameters is associated with the point of interception (20) at which the data (18) was intercepted; and
consulting the information (28) stored in the network mediation device (22) to determine which possible value for the field (24) is mapped to the determined combination of values; and
setting the value of the field (24) to the determined value.

4. The method of any one of claims 1-3, wherein the field (24) is an interceptionPointlD field within a packet switched header.

5. The method of any one of claims 1-4, further comprising receiving the information (28) from a lawful interception administrative device (30) in the communication network (10).

6. The method of any one of claims 1-5, wherein said labeling comprises labeling the data with another field that has a value set to identify the network mediation device (22).

7. A method performed by a lawful interception administrative device (30) in a communication network (10) of a communication service provider, the method comprising:
transmitting (610), to a network mediation device (22) in the communication network (10), information (28) indicating, for each of different possible points of interception at which data (18) is interceptable as part of a lawful interception service in the communication network (10), a value of a field (24) with which the network mediation device (22) is to label the data (18) for sending over a handover interface (26) towards a law enforcement monitoring facility (16).

8. The method of claim 7, wherein the value of the field (24) with which the network mediation device (22) is to label the data (18) is a function of:
a name of a network device at which the data (18) was intercepted; and
an interface used by the network device to provide the data (18) to the network mediation device (22).

9. The method of claim 8, wherein the value of the field (24) with which the network mediation device (22) is to label the data (18) is a function of:
a name of the communication service provider or the communication network (10) within which the network device is deployed; and
a country within which the data (18) was intercepted.

10. The method of any one of claims 7-9, wherein the information (28) maps different possible combinations of values for identifying parameters to different possible values for the field (24), and wherein the different possible combinations of values for the identifying parameters are respectively associated with the different possible points of interception in the communication network (10).

11. The method of claim 10, wherein the identifying parameters include:
a device parameter whose value indicates a name of a network device at which the data (18) was intercepted;
an interface parameter whose value indicates an interface used by the network device to provide the data (18) to the network mediation device (22);
a parameter whose value indicates a name of the communication service provider or the communication network (10) within which the network device is deployed; and
a country parameter whose value indicates a country within which the data (18) was intercepted.

12. The method of any one of claims 10-11, wherein further comprising generating, for each of the different possible combinations of values for the identifying parameters, the possible value for the field (24) mapped to that possible combination of values for the identifying parameters as a hash of that possible combination of values.

13. A network mediation device (22) configured for use in a communication network (10) of a communication service provider, the network mediation device (22) configured to:
receive data (18) intercepted at a point of interception (20) in the communication network (10) as part of a lawful interception service;
label the data (18) with a field (24) that has a value set to identify the point of interception (20) at which the data (18) was intercepted, wherein labeling the data (18) comprises determining the value to which to set the field (24) based on information (28) stored in the network mediation device (22) indicating different values to which to respectively set the field (24) for different possible points of interception in the communication network (10); and
send the labeled data (18L) over a handover interface (26) from the network mediation device (22) towards a law enforcement monitoring facility (16).

14. The network mediation device (22) of claim 13, configured to perform the method of any one of claims 2-6.

15. A lawful interception administrative device (30) configured for use in a communication network (10) of a communication service provider, the lawful interception administrative device (30) configured to:
transmit, to a network mediation device (22) in the communication network (10), information (28) indicating, for each of different possible points of interception at which data (18) is interceptable as part of a lawful interception service in the communication network (10), a value of a field (24) with which the network mediation device (22) is to label the data (18) for sending over a handover interface (26) towards a law enforcement monitoring facility (16).

16. The lawful interception administrative device (30) of claim 15, configured to perform the method of any one of claims 8-12.

## Patentansprüche

1. Verfahren, das von einer Netzwerkvermittlungsvorrichtung (22) in einem Kommunikationsnetzwerk (10) eines Kommunikationsdienstanbieters durchgeführt wird, wobei das Verfahren Folgendes umfasst:
Empfangen (500) von Daten (18), die an einem Abfangpunkt (20) in dem Kommunikationsnetzwerk (10) als Teil eines legalen Abfangdienstes abgefangen werden;
Markieren (510) der Daten (18) mit einem Feld (24), das einen Wert aufweist, der so gesetzt ist, dass er den Abfangpunkt (20) identifiziert, an dem die Daten (18) abgefangen wurden, wobei das Markieren der Daten (18) ein Bestimmen des Wertes, auf den das Feld (24) gesetzt werden soll, basierend auf Informationen (28) umfasst, die in der Netzwerkvermittlungsvorrichtung (22) gespeichert sind und verschiedene Werte angeben, auf die das Feld (24) jeweils für verschiedene mögliche Abfangpunkte in dem Kommunikationsnetzwerk (10) gesetzt werden soll.
Senden (520) der markierten Daten (18L) von der Netzwerkvermittlungsvorrichtung (22) über eine Übergabeschnittstelle (26) an eine Strafverfolgungsüberwachungseinrichtung (16).

2. Verfahren nach Anspruch 1, wobei das Bestimmen des Wertes ein Bestimmen des Wertes, auf den Feld (24) gesetzt werden soll, basierend auf Folgendem umfasst:
einem Namen einer Netzwerkvorrichtung, an der die Daten (18) abgefangen wurden; und
einer Schnittstelle, die von der Netzwerkvorrichtung zum Bereitstellen der Daten (18) für die Netzwerkvermittlungsvorrichtung (22) verwendet wird.

3. Verfahren nach einem der Ansprüche 1 bis 2, wobei die in der Netzwerkvermittlungsvorrichtung (22) gespeicherten Informationen (28) verschiedene mögliche Kombinationen von Werten für Identifizierungsparameter verschiedenen möglichen Werten für das Feld (24) zuordnen, wobei die verschiedenen möglichen Kombinationen von Werten für die Identifizierungsparameter jeweils mit verschiedenen möglichen Abfangpunkten in dem Kommunikationsnetzwerk (10) assoziiert sind und wobei das Markieren der Daten (18) Folgendes umfasst:
Bestimmen, welche Kombination von Werten für die Identifizierungsparameter mit dem Abfangpunkt (20) assoziiert ist, an dem die Daten (18) abgefangen wurden; und
Konsultieren der in der Netzwerkvermittlungsvorrichtung (22) gespeicherten Informationen (28), um zu bestimmen, welcher mögliche Wert für das Feld (24) der bestimmten Kombination von Werten zugeordnet ist; und
Setzen des Wertes des Feldes (24) auf den bestimmten Wert.

4. Verfahren nach einem der Ansprüche 1 bis 3, wobei das Feld (24) ein interceptionPointlD-Feld innerhalb eines paketvermittelten Headers ist.

5. Verfahren nach einem der Ansprüche 1 bis 4, ferner umfassend ein Empfangen der Informationen (28) von einer Verwaltungsvorrichtung für legales Abfangen (30) in dem Kommunikationsnetzwerk (10).

6. Verfahren nach einem der Ansprüche 1 bis 5, wobei das Markieren ein Markieren der Daten mit einem anderen Feld umfasst, das einen Wert aufweist, der so gesetzt ist, dass er die Netzwerkvermittlungsvorrichtung (22) identifiziert.

7. Verfahren, das von einer ersten Verwaltungsvorrichtung für legales Abfangen (30) in einem Kommunikationsnetzwerk (10) eines Kommunikationsdienstanbieters durchgeführt wird, wobei das Verfahren Folgendes umfasst:
Senden (610) von Informationen (28), die für jeden von verschiedenen möglichen Abfangpunkten, an denen als Teil eines legalen Abfangdienstes in dem Kommunikationsnetzwerk (10) Daten (18) abgefangen werden können, einen Wert eines Feldes (24) angeben, mit dem eine Netzwerkvermittlungsvorrichtung (22) die Daten (18) zum Senden über eine Übergabeschnittstelle (26) an eine Strafverfolgungsüberwachungseinrichtung (16) markieren soll, an die Netzwerkvermittlungsvorrichtung (22) in dem Kommunikationsnetzwerk (10).

8. Verfahren nach Anspruch 7, wobei der Wert des Feldes (24), mit dem die Netzwerkvermittlungsvorrichtung (22) die Daten (18) markieren soll, eine Funktion ist von:
einem Namen einer Netzwerkvorrichtung, an der die Daten (18) abgefangen wurden; und
einer Schnittstelle, die von der Netzwerkvorrichtung zum Bereitstellen der Daten (18) für die Netzwerkvermittlungsvorrichtung (22) verwendet wird.

9. Verfahren nach Anspruch 8, wobei der Wert des Feldes (24), mit dem die Netzwerkvermittlungsvorrichtung (22) die Daten (18) markieren soll, eine Funktion ist von:
einem Namen des Kommunikationsdienstanbieters oder des Kommunikationsnetzwerks (10), in dem die Netzwerkvorrichtung bereitgestellt ist; und
einem Land, in dem die Daten (18) abgefangen wurden.

10. Verfahren nach einem der Ansprüche 7 bis 9, wobei die Informationen (28) verschiedene möglichen Kombinationen von Werten für Identifizierungsparameter verschiedenen möglichen Werten für das Feld (24) zuordnen, wobei die verschiedenen möglichen Kombinationen von Werten für die Identifizierungsparameter jeweils mit verschiedenen möglichen Abfangpunkten in dem Kommunikationsnetzwerk (10) assoziiert sind.

11. Verfahren nach Anspruch 10, wobei die Identifizierungsparameter folgende umfassen:
einen Vorrichtungsparameter, dessen Wert einen Namen einer Netzwerkvorrichtung angibt, an der die Daten (18) abgefangen wurden;
einen Schnittstellenparameter, dessen Wert eine Schnittstelle angibt, die von der Netzwerkvorrichtung zum Bereitstellen der Daten (18) für die Netzwerkvermittlungsvorrichtung (22) verwendet wird;
einen Parameter, dessen Wert einen Namen des Kommunikationsdienstanbieters oder des Kommunikationsnetzwerks (10) angibt, in dem die Netzwerkvorrichtung bereitgestellt ist; und
einen Länderparameter, dessen Wert ein Land angibt, in dem die Daten (18) abgefangen wurden.

12. Verfahren nach einem der Ansprüche 10 bis 11, ferner umfassend ein Erzeugen für jede der verschiedenen möglichen Kombinationen von Werten für die Identifizierungsparameter des möglichen Wertes für das Feld (24), der dieser möglichen Kombination von Werten für die Identifizierungsparameter als ein Hash dieser möglichen Kombination von Werten zugeordnet wird.

13. Netzwerkvermittlungsvorrichtung (22), die zur Verwendung in einem Kommunikationsnetzwerk (10) eines Kommunikationsdienstanbieters konfiguriert ist, wobei die Netzwerkvermittlungsvorrichtung (22) zu Folgendem konfiguriert ist:
Empfangen von Daten (18), die an einem Abfangpunkt (20) in dem Kommunikationsnetzwerk (10) als Teil eines legalen Abfangdienstes abgefangen werden;
Markieren der Daten (18) mit einem Feld (24), das einen Wert aufweist, der so gesetzt ist, dass er den Abfangpunkt (20) identifiziert, an dem die Daten (18) abgefangen wurden, wobei das Markieren der Daten (18) ein Bestimmen des Wertes, auf den das Feld (24) gesetzt werden soll, basierend auf Informationen (28) umfasst, die in der Netzwerkvermittlungsvorrichtung (22) gespeichert sind und verschiedene Werte angeben, auf die das Feld (24) jeweils für verschiedene mögliche Abfangpunkte in dem Kommunikationsnetzwerk (10) gesetzt werden soll; und
Senden der markierten Daten (18L) von der Netzwerkvermittlungsvorrichtung (22) über eine Übergabeschnittstelle (26) an eine Strafverfolgungsüberwachungseinrichtung (16).

14. Netzwerkvermittlungsvorrichtung (22) nach Anspruch 13, die zum Durchführen des Verfahrens nach einem der Ansprüche 2 bis 6 konfiguriert ist.

15. Verwaltungsvorrichtung für legales Abfangen (30), die zur Verwendung in einem Kommunikationsnetzwerk (10) eines Kommunikationsdienstanbieters konfiguriert ist, wobei die Verwaltungsvorrichtung für legales Abfangen (30) zu Folgendem konfiguriert ist:
Senden von Informationen (28), die für jeden von verschiedenen möglichen Abfangpunkten, an denen als Teil eines legalen Abfangdienstes in dem Kommunikationsnetzwerk (10) Daten (18) abgefangen werden können, einen Wert eines Feldes (24) angeben, mit dem eine Netzwerkvermittlungsvorrichtung (22) die Daten (18) zum Senden über eine Übergabeschnittstelle (26) an eine Strafverfolgungsüberwachungseinrichtung (16) markieren soll, an die Netzwerkvermittlungsvorrichtung (22) in dem Kommunikationsnetzwerk (10).

16. Verwaltungsvorrichtung für legales Abfangen (30) nach Anspruch 15, die zum Durchführen des Verfahrens nach einem der Ansprüche 8 bis 12 konfiguriert ist.

## Revendications

1. Procédé réalisé par un dispositif de médiation de réseau (22) dans un réseau de communication (10) d'un fournisseur de services de communication, le procédé comprenant :
la réception (500) de données (18) interceptées à un point d'interception (20) dans le réseau de communication (10) dans le cadre d'un service d'interception légale ;
l'étiquetage (510) des données (18) avec un champ (24) qui présente une valeur définie pour identifier le point d'interception (20) auquel les données (18) ont été interceptées, dans lequel l'étiquetage des données (18) comprend la détermination de la valeur à laquelle définir le champ (24) sur la base d'informations (28) stockées dans le dispositif de médiation de réseau (22) indiquant différentes valeurs auxquelles définir respectivement le champ (24) pour différents points d'interception possibles dans le réseau de communication (10) ; et
l'envoi (520) des données étiquetées (18L) sur une interface de transfert intercellulaire (26) du dispositif de médiation de réseau (22) vers une installation de surveillance d'application de la loi (16).

2. Procédé selon la revendication 1, dans lequel la détermination de la valeur comprend la détermination de la valeur à laquelle définir le champ (24) sur la base de :
un nom d'un dispositif de réseau au niveau duquel les données (18) ont été interceptées ; et
une interface utilisée par le dispositif de réseau pour fournir les données (18) au dispositif de médiation de réseau (22).

3. Procédé selon la revendication 1 ou 2, dans lequel les informations (28) stockées dans le dispositif de médiation de réseau (22) mettent différentes combinaisons de valeurs possibles pour des paramètres d'identification en correspondance avec différentes valeurs possibles pour le champ (24), dans lequel les différentes combinaisons de valeurs possibles pour les paramètres d'identification sont associées respectivement aux différents points d'interception possibles dans le réseau de communication (10), et dans lequel l'étiquetage des données (18) comprend :
la détermination d'une combinaison de valeurs pour les paramètres d'identification qui est associée au point d'interception (20) auquel les données (18) ont été interceptées ; et
la consultation des informations (28) stockées dans le dispositif de médiation de réseau (22) pour déterminer une valeur possible pour le champ (24) qui est mise en correspondance avec la combinaison de valeurs déterminée ; et
la définition de la valeur du champ (24) à la valeur déterminée.

4. Procédé selon l'une quelconque des revendications 1 à 3, dans lequel le champ (24) est un champ interceptionPointID à l'intérieur d'un en-tête à commutation de paquets.

5. Procédé selon l'une quelconque des revendications 1 à 4, comprenant en outre la réception des informations (28) depuis un dispositif administratif d'interception légale (30) dans le réseau de communication (10).

6. Procédé selon l'une quelconque des revendications 1 à 5, dans lequel ledit étiquetage comprend l'étiquetage des données avec un autre champ présentant une valeur définie pour identifier le dispositif de médiation de réseau (22).

7. Procédé réalisé par un dispositif administratif d'interception légale (30) dans un réseau de communication (10) d'un fournisseur de services de communication, le procédé comprenant :
la transmission (610), à un dispositif de médiation de réseau (22) dans le réseau de communication (10), d'informations (28) indiquant, pour chacun de différents points d'interception possibles auxquels des données (18) peuvent être interceptées dans le cadre d'un service d'interception légale dans le réseau de communication (10), une valeur d'un champ (24) avec laquelle le dispositif de médiation de réseau (22) doit étiqueter les données (18) pour les envoyer sur une interface de transfert intercellulaire (26) vers une installation de surveillance d'application de la loi (16).

8. Procédé selon la revendication 7, dans lequel la valeur du champ (24) avec laquelle le dispositif de médiation de réseau (22) doit étiqueter les données (18) est une fonction de :
un nom d'un dispositif de réseau au niveau duquel les données (18) ont été interceptées ; et
une interface utilisée par le dispositif de réseau pour fournir les données (18) au dispositif de médiation de réseau (22).

9. Procédé selon la revendication 8, dans lequel la valeur du champ (24) avec laquelle le dispositif de médiation de réseau (22) doit étiqueter les données (18) est une fonction de :
un nom du fournisseur de services de communication ou du réseau de communication (10) à l'intérieur duquel le dispositif de réseau est déployé ; et
un pays à l'intérieur duquel les données (18) ont été interceptées.

10. Procédé selon l'une quelconque des revendications 7 à 9, dans lequel les informations (28) mettent différentes combinaisons possibles de valeurs pour des paramètres d'identification en correspondance avec différentes valeurs possibles pour le champ (24), et dans lequel les différentes combinaisons possibles de valeurs pour les paramètres d'identification sont associées respectivement aux différents points d'interception possibles dans le réseau de communication (10).

11. Procédé selon la revendication 10, dans lequel les paramètres d'identification comprennent :
un paramètre de dispositif dont une valeur indique un nom d'un dispositif de réseau au niveau duquel les données (18) ont été interceptées ;
un paramètre d'interface dont une valeur indique une interface utilisée par le dispositif de réseau pour fournir les données (18) au dispositif de médiation de réseau (22) ;
un paramètre dont une valeur indique un nom du fournisseur de services de communication ou du réseau de communication (10) à l'intérieur duquel le dispositif de réseau est déployé ; et
un paramètre de pays dont une valeur indique un pays à l'intérieur duquel les données (18) ont été interceptées.

12. Procédé selon la revendication 10 ou 11, comprenant en outre la génération, pour chacune des différentes combinaisons de valeurs possibles pour les paramètres d'identification, de la valeur possible pour le champ (24) mise en correspondance avec cette combinaison de valeurs possible pour les paramètres d'identification sous forme d'un hachage de cette combinaison de valeurs possible.

13. Dispositif de médiation de réseau (22) configuré pour être utilisé dans un réseau de communication (10) d'un fournisseur de services de communication, le dispositif de médiation de réseau (22) étant configuré pour :
recevoir des données (18) interceptées à un point d'interception (20) dans le réseau de communication (10) dans le cadre d'un service d'interception légale ;
étiqueter les données (18) avec un champ (24) qui présente une valeur définie pour identifier le point d'interception (20) auquel les données (18) ont été interceptées, dans lequel l'étiquetage des données (18) comprend la détermination de la valeur à laquelle définir le champ (24) sur la base d'informations (28) stockées dans le dispositif de médiation de réseau (22) indiquant différentes valeurs auxquelles définir respectivement le champ (24) pour différents points d'interception possibles dans le réseau de communication (10) ; et
envoyer les données étiquetées (18L) sur une interface de transfert intercellulaire (26) du dispositif de médiation de réseau (22) vers une installation de surveillance d'application de la loi (16).

14. Dispositif de médiation de réseau (22) selon la revendication 13, configuré pour réaliser le procédé selon l'une quelconque des revendications 2 à 6.

15. Dispositif administratif d'interception légale (30) configuré pour être utilisé dans un réseau de communication (10) d'un fournisseur de services de communication, le dispositif administratif d'interception légale (30) étant configuré pour :
transmettre, à un dispositif de médiation de réseau (22) dans le réseau de communication (10), des informations (28) indiquant, pour chacun de différents points d'interception possibles auxquels des données (18) peuvent être interceptées dans le cadre d'un service d'interception légale dans le réseau de communication (10), une valeur d'un champ (24) avec laquelle le dispositif de médiation de réseau (22) doit étiqueter les données (18) pour les envoyer sur une interface de transfert intercellulaire (26) vers une installation de surveillance d'application de la loi (16).

16. Dispositif administratif d'interception légale (30) selon la revendication 15, configuré pour réaliser le procédé selon l'une quelconque des revendications 8 à 12.
